# EUROPEAN PATENT APPLICATION

(11) **EP 4 164 229 A1**
(43) Date of publication of application: **12.04.2023**
(21) Application number: 21843423.1
(22) Date of filing: 24.06.2021
(51) Int. Cl.: H04N 21/2312, H04N 5/262, H04N 5/765, H04N 21/232

(54) **INFORMATION PROCESSING DEVICE, INFORMATION PROCESSING METHOD, AND PROGRAM**

(30) Priority: 15.07.2020 JP 2020121154
(71) Applicant: Sony Group Corporation, Minato-Ku, Tokyo, 108-0075 (JP)
(72) Inventor: NAKAO, Yuta, Tokyo 108-0075 (JP); ISHII, Satoru, Tokyo 108-0075 (JP); INABA, Seijiro, Tokyo 108-0075 (JP); YAMAGUCHI, Tadashi, Tokyo 108-0075 (JP); WAKATSUKI, Masashi, Tokyo 108-0075 (JP)
(74) Representative: D Young & Co LLP
(86) International application number: PCT/JP2021/024019
(87) International publication number: WO 2022/014296

(57) **Abstract**

An information processing apparatus includes a storage management unit that stores negative content determined as negative scene contents among material content constituting a story of content to be automatically produced in a state of being distinguishable from other material content.

## Description

### TECHNICAL FIELD

The present technology relates to an information processing apparatus, an information processing method, and a program, and particularly relates to a technical field of automatic production of content using an image and audio.

### BACKGROUND ART

Patent Document 1 described below discloses a technique for producing moving image content by joining unit videos as materials.

### CITATION LIST

### PATENT DOCUMENT

Patent Document 1: Japanese Patent Application Laid-Open No. 2009-130597

### SUMMARY OF THE INVENTION

### PROBLEMS TO BE SOLVED BY THE INVENTION

In recent years, due to downsizing of recording devices such as imaging devices and sound recording devices, mounting on portable devices, or spread of various devices, and the like, imaging of images (images are collectively referred to as moving images and still images) and recording of audio have been facilitated and generalized. Furthermore, due to diversification of recording media such as memory cards, spread of cloud storage using network communication, and the like, storage modes of data such as photographs, moving images, and audio are also diversified. In such an environment, for example, it becomes relatively easy for a server apparatus to acquire an image and the like of the customer user, and it is conceivable to produce content such as a short movie as a service, in which the customer user is a main character. Moreover, with recent advances in AI processing and the like, it is conceivable to accurately collect images and the like as materials and automatically produce content desirable for the customer user.

Here, considering that a server apparatus that performs the service automatically produces content and provides the content to a customer, it is also assumed that a negative scene is required for the user in terms of the story configuration. On the other hand, there are cases where the user himself/herself does not want to view or save an image material and the like that is a negative scene for the user.

Therefore, an object of the present technology is to enable a material content having negative contents for a user to be used for automatic production while appropriately managing the material content.

### SOLUTIONS TO PROBLEMS

An information processing apparatus according to the present technology includes a storage management unit that stores negative content determined as negative scene contents among material content constituting a story of content to be automatically produced in a state of being distinguishable from other material content.

It is considered that content having a certain story is automatically produced using multiple material content. The material content is an image (a moving image or a still image), audio, and the like constituting each scene constituting a story. Among the material content, negative content is classified. For example, material content determined to have scene contents such as pessimistic, negative, or backward is defined as negative content. Such negative content is stored and managed separately from other material content.

In the above-described information processing apparatus according to the present technology, it is conceivable that the storage management unit performs processing of storing the material content by distinguishing between the negative content and positive content determined as positive scene contents.

The material content is classified into positive content and negative content. For example, material content determined to have scene contents such as optimistic, positive, or forward is defined as positive content. The positive content and the negative content are separately stored and managed.

In the above-described information processing apparatus according to the present technology, it is conceivable that the storage management unit stores the material content determined as the negative content in a second storage device different from a first storage device that stores and manages the material content other than the negative content.

For example, the negative content is stored using a storage device different from a storage device of a server that manages the material content.

In the above-described information processing apparatus according to the present technology, it is conceivable that the first storage device includes a storage device managed in a state where user access to material content is permitted, and the second storage device includes a storage device managed in a state where access to material content is permitted only for a specific administrator.

For example, it is assumed that the first storage device and the second storage device have different access permissions.

In the above-described information processing apparatus according to the present technology, it is conceivable that the second storage device includes a storage device in which an access speed from the storage management unit is slower than that of the first storage device.

For example, it is assumed that the first storage device and the second storage device have different access speeds due to differences in the inside and outside of a network, communication methods, and the like.

In the above-described information processing apparatus according to the present technology, it is conceivable that the first storage device can be accessed by the storage management unit via a first network, and the second storage device can be accessed by the storage management unit via a second network.

For example, it is assumed that the first storage device and the second storage device are accessed via different networks.

In the above-described information processing apparatus according to the present technology, it is conceivable that the storage management unit causes the material content determined as the negative content and the material content other than the negative content to be stored in a storage device in different hierarchical management states.

For example, a storage device of a server that manages the material content is used to manage the negative content and the material content other than the negative content in folders in different hierarchies. Alternatively, in a case where different storages are used, the hierarchical management states are made different.

In the above-described information processing apparatus according to the present technology, it is conceivable that the storage management unit performs processing of facilitating access by the storage management unit in response to determination that the negative content is related to positive content determined as positive scene contents.

The negative content is normally stored and managed in a state where accessibility is lowered, but is managed in a state where the accessibility is improved in response to confirming the presence of the related positive content.

In the above-described information processing apparatus according to the present technology, it is conceivable that the storage management unit sets the negative content as material content that can be used as candidate content for content automatic production processing in response to determination that the negative content is related to positive content determined as positive scene contents.

That is, normally, the negative content is not a candidate for use in the automatically produced content.

An information processing method according to the present technology including storage management processing of storing negative content determined as negative scene contents among material content constituting a story of content to be automatically produced in a state of being distinguishable from other material content, in which an information processing apparatus executes the storage management processing. Accordingly, the negative content is appropriately managed.

A program according to the present technology is a program causing an information processing apparatus to execute such an information processing method. Therefore, implementation of the information processing apparatus of the present technology is facilitated.

### BRIEF DESCRIPTION OF DRAWINGS

Fig. 1 is an explanatory diagram of a system configuration according to an embodiment of the present technology.
Fig. 2 is an explanatory diagram of a functional configuration related to content automatic production according to the embodiment.
Fig. 3 is a block diagram of a configuration of an information processing apparatus according to the embodiment.
Fig. 4 is an explanatory diagram of a story configuration example of automatically produced content according to the embodiment.
Fig. 5 is an explanatory diagram of an operation of a function related to content automatic production in a server apparatus of the embodiment.
Fig. 6 is an explanatory diagram of an example of a workflow in which the system of the embodiment is executed.
Fig. 7 is an explanatory diagram of an example of relevance presentation information according to the embodiment.
Fig. 8 is an explanatory diagram of an example of relevance presentation information according to the embodiment.
Fig. 9 is an explanatory diagram of an example of relevance presentation information according to the embodiment.
Fig. 10 is an explanatory diagram of an example of relevance presentation information according to the embodiment.
Fig. 11 is a flowchart of automatic production processing according to the embodiment.
Fig. 12 is a flowchart of story setting processing according to the embodiment.
Fig. 13 is a flowchart of material content complement processing according to the embodiment.
Fig. 14 is a flowchart of material content complement processing according to the embodiment.
Fig. 15 is a flowchart of material content complement processing according to the embodiment.
Fig. 16 is a flowchart of material content request processing performed in advance according to the embodiment.
Fig. 17 is a flowchart of material content complement processing according to the embodiment.
Fig. 18 is a flowchart of material content complement processing according to the embodiment.
Fig. 19 is a flowchart of material content evaluation processing according to the embodiment.
Fig. 20 is a flowchart of feedback processing according to the embodiment.
Fig. 21 is a flowchart of processing at the time of story setting of the embodiment.
Fig. 22 is a flowchart of feedback handling processing according to the embodiment.
Fig. 23 is a flowchart of material content management processing according to the embodiment.
Fig. 24 is a flowchart of material content management processing according to the embodiment.
Fig. 25 is a flowchart of material content management processing according to the embodiment.

### MODE FOR CARRYING OUT THE INVENTION

Hereinafter, embodiments will be described in the following order.
<1. System configuration>
<2. Outline of automatically produced content>
<3. Flow of content production>
<4. Automatic production processing including content complement>
<5. Recommend/complement processing before production>
<6. Evaluation and feedback of material content>
<7. Management of negative/positive content>
<8. Conclusion and modification examples>

Note that, in the present disclosure, "content" is distinguished using the following terms.

### · Automatically produced content

In the present disclosure, for example, content to be provided to a user as a customer is automatically produced by an information processing apparatus. Although content that is automatically produced and viewed by the user is referred to as "automatically produced content", in the embodiment, the "automatically produced content" is mainly referred to as "impressed content" for convenience of description since an example in which the content is automatically produced for the purpose of impressing the user of the customer and the like is exemplified as the "automatically produced content". The "impressed content" is one specific example of the "automatically produced content".

There are various forms of the automatically produced content such as content including a moving image and audio, content such as a slide show by a still image, content including a still image and audio, content only by audio, content including a moving image, a still image, and audio, and content including text data.

### · Material content

The automatically produced content is produced by combining a plurality of moving image materials, still image materials, audio materials, text materials, and the like. Content data as a moving image, a still image, an audio, a text, and the like as each material is referred to as "material content". Any content can be material content.

### · Candidate content

In the material content, the content refers to material content that is a candidate to be used as an image or audio of a certain scene in production of the automatically produced content. For example, some candidate content that can be adapted to a certain scene is extracted from a large amount of material content, and material content to be used as the scene is selected from the candidate content.

### · Negative content and positive content

Among the material content, for example, content determined to have scene contents such as optimistic, positive, or forward is referred to as "positive content".

Among the material content, for example, content determined to have scene contents such as pessimistic, negative, or backward is referred to as "negative content".

However, the "positive content" and the "negative content" are not absolute classifications, and may be determined by determining some determination criterion according to a scene content type, according to a customer user, according to a time/period, or according to common knowledge, a social situation, and the like.

In the present technology, material content determined to be at least "negative content" is managed separately from other material content.

Furthermore, in the present disclosure, the "image" may be either a moving image or a still image, and is a term used as a general term for them.

### <1. System configuration>

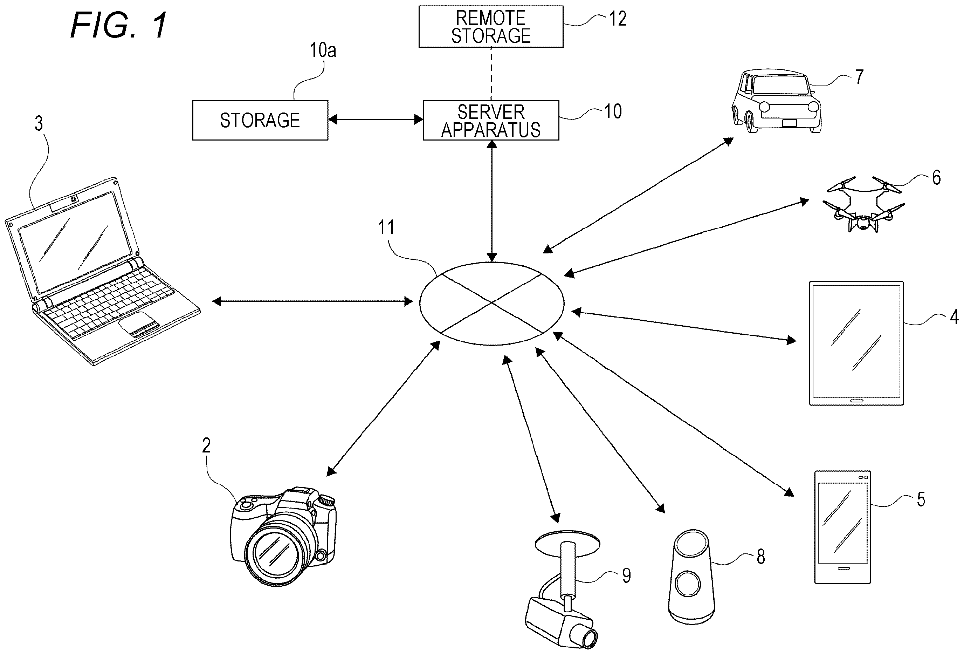

Fig. 1 illustrates a system configuration example including a server apparatus 10.

In the embodiment, an example will be described in which an information processing apparatus constituting the server apparatus 10 automatically produces impressed content for a customer user by using a large number of image materials of a large number of users and the like and provides the impressed content to the user.

Furthermore, an example in which the material content is mainly moving image data (including audio) will be described. That is, it is assumed that the impressed content automatically produced is an example such as a movie produced by editing a plurality of moving images.

The server apparatus 10 in Fig. 1 is an information processing apparatus capable of communicating with various devices via a network 11 such as the Internet, for example, and functions as a so-called cloud server, for example.

The server apparatus 10 can store a large amount of material content and produced impressed content in a storage 10a under the management.

Note that the storage 10a represents a storage that can be accessed by the server apparatus 10, and may be a storage device mounted inside the information processing apparatus as the server apparatus 10, or may be a storage device connected by a local area network (LAN) and the like. Furthermore, a storage located away from the server apparatus 10 or a storage device on a user side may be used as the storage 10a herein.

That is, if the server apparatus 10 is a target storage from which the material content can be collected for the automatic generation of the impressed content, there is a possibility that it corresponds to the storage 10a illustrated here.

Furthermore, the server apparatus 10 can also store material content and the like in a remote storage 12.

The remote storage 12 is illustrated as a storage device having lower accessibility than the storage 10a. The remote storage 12 may be a storage device in the server apparatus 10 or may be an external storage device. A detailed example will be described later.

The remote storage 12 may be a storage device that is physically inaccessible from a user-side device, for example, a computer device 3, a tablet terminal 4, a mobile terminal 5, and the like illustrated in the drawing, or by management of access authority and the like.

Such a server apparatus 10 may be a server that provides a cloud storage service on a network, a server that provides a social networking service (SNS), or a platform server that provides a comprehensive service.

As the network 11, for example, the Internet, a home network, a LAN, a satellite communication network, and various other networks are assumed.

Various devices can upload image data and the like to the server apparatus 10 via the network 11 and download various information from the server apparatus 10.

Furthermore, for example, communication by a file transfer protocol (FTP) and the like may be adopted as a part or all of the network 11. Furthermore, short-range wireless communication such as Bluetooth (registered trademark), Wireless Fidelity (WI-FI: registered trademark), and Near Field Communication (NFC: registered trademark), infrared communication, and the like may be adopted.

In any case, any network capable of data communication can be assumed as the network 11.

Fig. 1 illustrates a camera 2, the computer device 3, the tablet terminal 4, the mobile terminal 5, a camera-equipped flying object 6, a camera-equipped vehicle 7, an agent device 8, and a monitoring camera 9 as devices capable of imaging and recording on the user side. These are merely examples of devices capable of imaging and recording, and there may be other devices.

The camera 2 is an imaging device capable of capturing a still image or a moving image and recording or transferring and outputting the still image or the moving image as image data. It is assumed that the camera 2 is used by a large number of users, and captured image data (moving image or still image) is stored in the storage 10a and the like, so that the server apparatus 10 can use the image data as material content.

Examples of the computer device 3 include a notebook personal computer, a desktop personal computer, and the like. The tablet terminal 4 and the mobile terminal 5 such as a smartphone can also be said to be an aspect of the computer device.

In the case of the computer device 3, the tablet terminal 4, the mobile terminal 5, and the like, for example, image data captured by a built-in camera, image data transferred from another device such as the camera 2, image data generated as a composite image, computer graphics (CG), and the like, image data as an image of a video chat, image data shared with a family member or a friend, and the like is stored in the storage 10a and the like, and can be accessed by the server apparatus 10.

The camera-equipped flying object 6 is assumed to be a flying object equipped with a camera such as a drone, for example. It is assumed that image data obtained by imaging by the camera-equipped flying object 6 is stored in the storage 10a and the like, and can be accessed by the server apparatus 10.

It is assumed that the drone and the like is owned by the user, is a public object, or is owned by a business operator of an impressed content providing service and used to image the user of the customer for material content collection.

The camera-equipped vehicle 7 is, for example, a vehicle such as a general automobile, and is a vehicle on which a camera such as a drive recorder is mounted. For example, by providing an image of a drive recorder of a vehicle owned by the user to the server apparatus 10, it is assumed that image data obtained by imaging by the camera-equipped vehicle 7 is stored in the storage 10a and the like and can be accessed by the server apparatus 10.

The agent device 8 is an interface device for performing services such as information provision and home appliance control at home and the like, for example, and is assumed to be capable of imaging by mounting a camera. It is assumed that image data obtained by imaging by the agent device 8 is stored in the storage 10a and the like and can be accessed by the server apparatus 10.

Here, the agent device 8 is exemplified, but for example, it is assumed that a housework support robot, a pet-type robot, and the like used at home also has an imaging function, and thus image data obtained by imaging thereof is stored in the storage 10a and the like, and can be accessed by the server apparatus 10.

The monitoring camera 9 is, for example, installed in a public place or installed in a private space by a general user. It is assumed that such image data captured by the monitoring camera 9 is stored in the storage 10a and the like and can be accessed by the server apparatus 10.

The various devices as described above are devices capable of obtaining material content used by the server apparatus 10 or devices capable of a user interface.

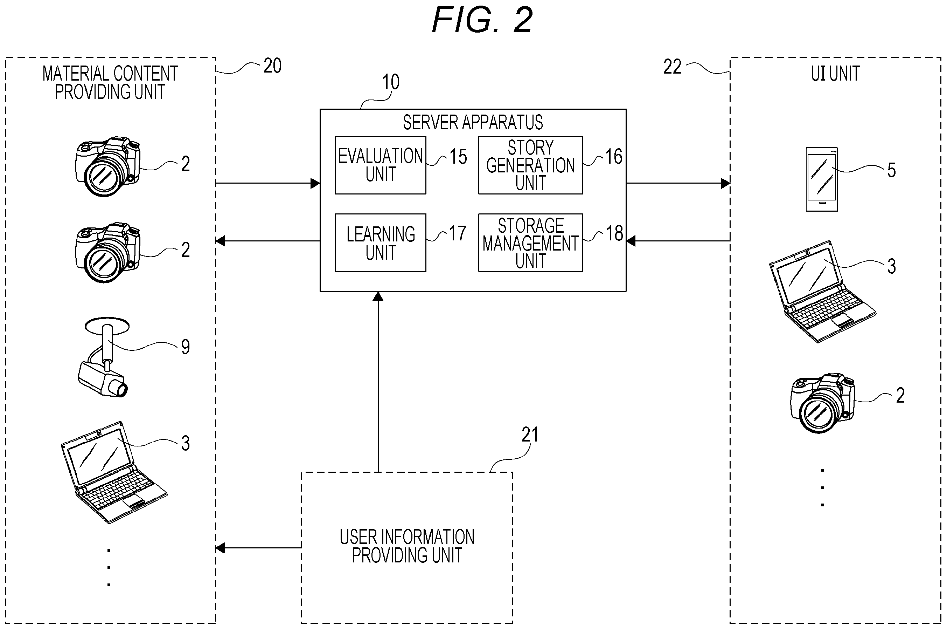

Fig. 2 illustrates a relationship between the server apparatus 10 and various devices.

The various devices illustrated in Fig. 1 may function as a material content providing unit 20 in Fig. 2 or may function as a user interface (UI) unit 22.

Each of the devices described above, such as the camera 2, the computer device 3, and the monitoring camera 9, for example, can image or generate content as moving image data, and thus can be a source of material content that can be used by the server apparatus 10.

That is, images obtained by various devices can be material content for producing impressed content as a personal movie of the customer user.

Although it is merely an example and other than the following can be considered, an image that can be material content is as follows.
· Image captured and recorded by a customer user and uploaded to cloud
· Image captured by a contractor based on a service request
· Image provided by opening of local data of the customer user
· Image captured and uploaded by friends, family members, and the like of the customer user
· Image captured by a robot, a drone, an in-vehicle camera, and the like
· Image of a local cameras, a surveillance camera, and the like
· Image of SNS such as user/friend/follower, and the like
· Image during communication such as a video chat
· Image produced by image processing, such as a CG image and a fake image
· Public image and image picture permitted for free use

These images are stored in the storage 10a or the remote storage 12 in a state where the images can be managed as images corresponding to individual users, for example.

In a case where a certain user A is a customer and produces impressed content, an image associated with the user A is usable material content.

Each piece of image data may be collectively stored in association with identification information of an individual user, or a plurality of pieces of user identification information may be assigned to one image, and one image may be used for a plurality of users.

Furthermore, the camera 2, the computer device 3, the mobile terminal 5, and the like are devices having UI functions such as display and operation input. Therefore, these devices can function as the UI unit 22 in a case where the impressed content and various images provided by the server apparatus 10 are displayed to the user or in a case where the user operation is received.

Furthermore, Fig. 2 illustrates a functional configuration example provided in the server apparatus 10.

The server apparatus 10 includes an evaluation unit 15, a story generation unit 16, a learning unit 17, and a storage management unit 18 as functions related to automatic production processing of impressed content.

The evaluation unit 15 is a processing function of setting an evaluation value for each material content stored in, for example, the storage 10a and made accessible by the server apparatus 10.

The story generation unit 16 is a function of automatically producing impressed content by performing story setting processing of the impressed content for the customer user, material content selection processing according to the story setting processing, editing processing of the selected material content, and the like.

The learning unit 17 is a function of performing learning processing adapted to an individual user in response to feedback from users.

The storage management unit 18 performs storage management of material content, particularly storage management of negative content and positive content.

Although specific processing examples of these functions will be described later, high-quality processing is realized by performing, for example, AI processing as each function.

Furthermore, Fig. 2 also illustrates a function as a user information providing unit 21.

The user information providing unit 21 may be a function incorporated in the camera 2, the computer device 3, the tablet terminal 4, the mobile terminal 5, and the like, or may be a separate device or a sensor device. The user information providing unit may be, as a wearable device, a device capable of acquiring user information (position information indicating whereabouts of a user, vital information, and the like) at each time point.

Then, as the user information, for example, various types of information such as attribute information such as the age and gender of the user, a hobby, information of the user's face, a family structure, the age of a family, a friend, and the like, schedule information, event information (schedule, participation history, SNS information, and the like), a camera history of the user, vital information, position information, and the like are assumed.

Such user information may be managed in association with an individual user, or may be associated with material content such as image data. For example, there is data added to and associated with image data as metadata.

For example, attribute information such as the age and gender of the user, a hobby, a face of the user, a family structure, information such as the age of a family member and a friend, schedule information, event information, a camera history, and the like may be associated with an individual user. The server apparatus 10 manages such user information for every user as information for performing appropriate impressed content production for the user.

Furthermore, in the sense of information at the time of imaging, the age of the user at the time of imaging, the family structure at the time of imaging, the information of friends, and the like, the schedule information and event information corresponding to imaging contents (information on what event the image is in), the vital information at the time of imaging, the position information at the time of imaging, and the like can be the user information associated with the image. For example, the user information is stored as metadata for every material content, or is separately managed as an information file and the like corresponding to the material content. Therefore, the server apparatus 10 can use the user information corresponding to every material content.

Furthermore, the user information by the user information providing unit 21 may include not only information directly detected but also, for example, information obtained by an image analysis result, analysis of a plurality of pieces of sensing data, and the like.

For example, by analyzing captured image data, there are facial features, facial expressions, and complexions of the user, and information of emotions estimated from them.

Furthermore, in a case where a heart rate, brain sensing information, a blood pressure value, a perspiration amount, and the like are measured as the vital sensor, the user's emotion can be estimated from them and used as the user information.

Furthermore, human relationship information at the time of imaging is also useful. For example, type information such as an image captured by the customer user himself/herself to be processed, an image of the customer user captured by a friend, an image of the customer user captured by a family member, and an image objectively captured by a monitoring camera can also be the user information associated with the image.

The user information obtained by the user information providing unit 21 as described above is provided to the device serving as the material content providing unit 20 and added to the image data as metadata, or provided to the server apparatus 10 and managed in association with the user individual or the material content.

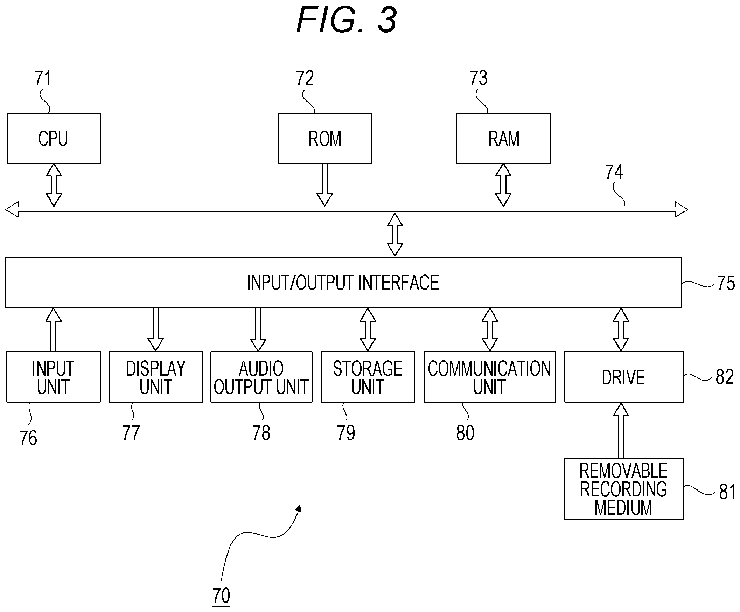

Next, Fig. 3 illustrates an example of a hardware configuration of an information processing apparatus 70 that can be configured as the server apparatus 10, the computer device 3, the tablet terminal 4, the mobile terminal 5, and the like.

A central processing unit (CPU) 71 of the information processing apparatus 70 executes various types of processing in accordance with a program stored in a read only memory (ROM) 72 or a program loaded from a storage unit 79 into a random access memory (RAM) 73. The RAM 73 also appropriately stores data and the like necessary for the CPU 71 to execute various processing.

The CPU 71, the ROM 72, and the RAM 73 are connected to one another via a bus 74. An input/output interface 75 is also connected to the bus 74.

An input unit 76 including an operator and an operation device is connected to the input/output interface 75.

For example, as the input unit 76, various operators and operation devices such as a keyboard, a mouse, a key, a dial, a touch panel, a touch pad, and a remote controller are assumed.

An operation of the user is detected by the input unit 76, and a signal corresponding to the input operation is interpreted by the CPU 71.

Furthermore, a display unit 77 including a liquid crystal display (LCD), an organic electro-luminescence (EL) display, and the like, and an audio output unit 78 including a speaker and the like are integrally or separately connected to the input/output interface 75.

The display unit 77 is a display unit that performs various displays, and includes, for example, a display device provided in a housing of the information processing apparatus 70, a separate display device connected to the information processing apparatus 70, and the like.

The display unit 77 executes display of an image for various types of image processing, a moving image to be processed, and the like on a display screen on the basis of an instruction from the CPU 71. Furthermore, the display unit 77 displays various operation menus, icons, messages, and the like, that is, displays as a graphical user interface (GUI) on the basis of an instruction from the CPU 71.

The input/output interface 75 may be connected to a storage unit 79 including a hard disk, a solid-state memory, and the like, and a communication unit 80 that performs communication using various communication methods.

The communication unit 80 performs communication processing via a transmission path such as the Internet, wired/wireless communication with various devices, bus communication, and the like.

In a case where the information processing apparatus 70 is considered as the server apparatus 10, the communication unit 80 has at least a function of performing communication via the network 11.

A drive 82 is also connected to the input/output interface 75 as necessary, and a removable recording medium 81 such as a magnetic disk, an optical disk, a magneto-optical disk, or a semiconductor memory is appropriately mounted.

By the drive 82, a data file such as an image file, various computer programs, and the like can be read from the removable recording medium 81. The read data file is stored in the storage unit 79, and images and audio included in the data file are output by the display unit 77 and the audio output unit 78. Furthermore, the computer program and the like read from the removable recording medium 81 are installed in the storage unit 79 as necessary.

In the information processing apparatus 70, for example, software for processing of the present disclosure can be installed via network communication by the communication unit 80 or the removable recording medium 81. Alternatively, the software may be stored in advance in the ROM 72, the storage unit 79, and the like.

In a case where the server apparatus 10 is assumed as the information processing apparatus 70, in the information processing apparatus 70, the functional configuration described in Fig. 2 is constructed in the CPU 71 by software (application program).

### <2. Outline of automatically produced content>

The server apparatus 10 targets a certain customer user as automatically produced content, and produces impressed content as a personal movie of the customer user.

An outline of a story configuration as the impressed content will be described.

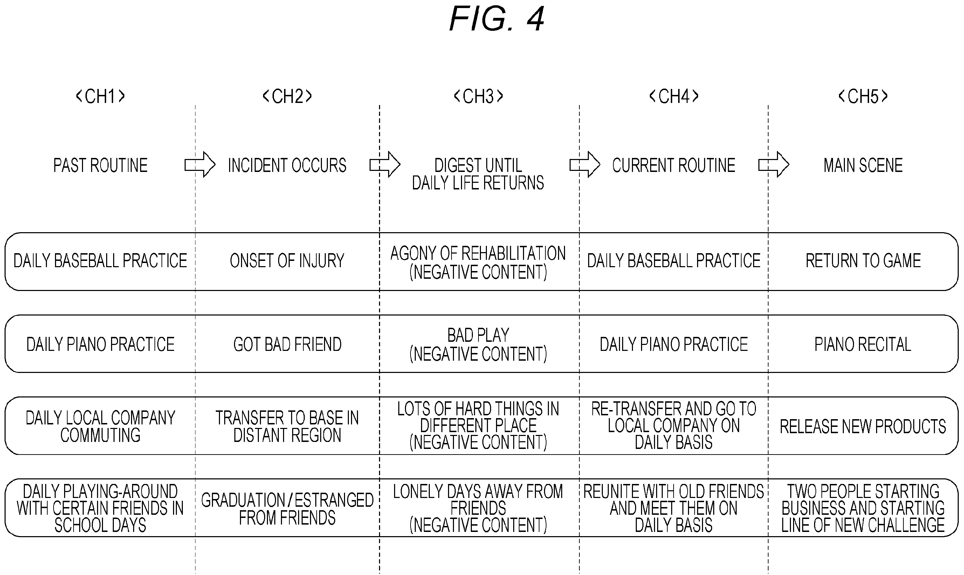

Fig. 4 illustrates an example of a story configuration of impressed content and a variation corresponding thereto.

Here, an example in which the story configuration includes the following chapter CH1, CH2, CH3, CH4, and CH5 while including the beginning, ending, and conclusion in terms of content is described.

### Chapter CH1: Past routine

Here, a scene indicating that the user was doing every day is arranged. Examples thereof include baseball practice, piano practice, company commuting, and friendship.

### Chapter CH2: Incident occurs

Scenes indicating a trigger for not doing (or not being able to do) what has been done on a daily basis, an event where a change has occurred, and the like are arranged.

For example, there are events such as injury, new friendship, transfer, and graduation.

### Chapter CH3: Digest until daily life returns

For example, negative content is arranged.

Scenes indicating affliction during rehabilitation from injury, bad play, hard times, alone days, and the like are applicable.

### Chapter CH4: Current routine

Scenes indicating current daily life that has escaped from a negative state are arranged.

For example, returning to baseball practice, hitting into piano practice, transferring again, rejoining with friends, and the like.

### Chapter CH5: Main scene

Exciting scenes (moving scenes) on the story are arranged.

For example, it is a scene of returning to a game and playing an active role, a piano recital, achievement achieved in work, development of friendship, and the like.

Although the above is an example, it is conceivable to generate a personal inspiring content of the customer user by featuring an inspiring scene while including the beginning, ending, and conclusion in this way.

### <3. Flow of content production>

For example, a flow of automatic production of impressed content having such a story configuration will be described.

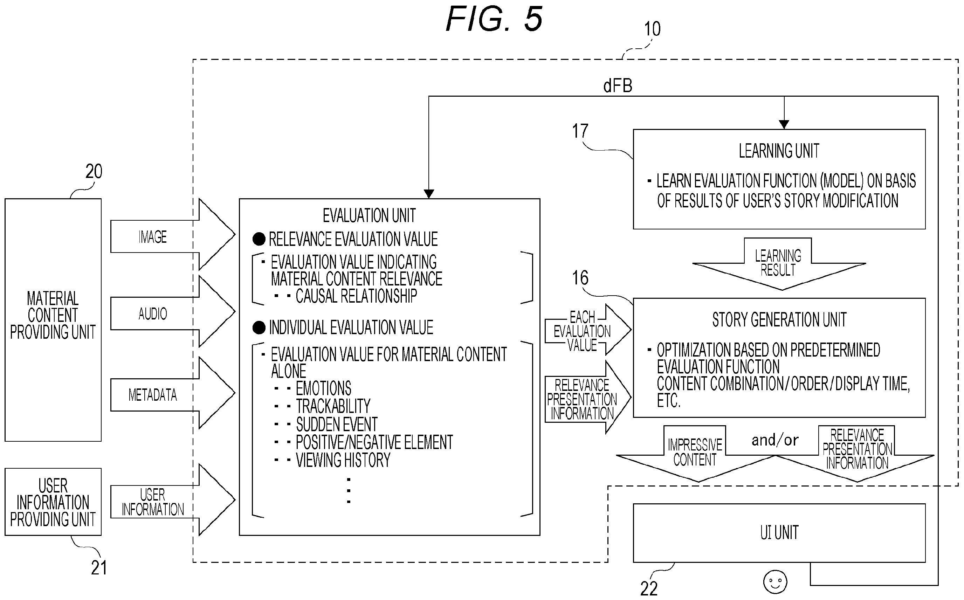

Fig. 5 illustrates an outline of a flow of processing of the evaluation unit 15, the learning unit 17, and the story generation unit 16 as functions of the server apparatus 10. Furthermore, a relation with the material content providing unit 20, the user information providing unit 21, and the UI unit 22 is also illustrated.

As described above, the image and audio that can be the material content and the metadata (including the user information associated with the material content) accompanying the image and audio are provided from the material content providing unit 20 to the server apparatus 10.

Furthermore, the user information is provided from the user information providing unit 21.

The material content and the user information are stored and managed in association with each individual user, for example, by the function of the storage management unit 18 illustrated in Fig. 2 in the server apparatus 10, and evaluation value setting processing is performed by the evaluation unit 15 for the stored material content.

The evaluation unit 15 sets an evaluation value indicating the relevance between the material contents for each material content and sets an individual evaluation value for the material content alone.

The relevance evaluation value in a certain material content is a value indicating relevance between the material content and another material content, and is, for example, a value obtained by quantifying magnitude of relevance such as a causal relationship and a time-series relationship.

The individual evaluation value is a value for evaluating the value of the image itself or the scene of the material content itself alone, the importance of the content, and the like.

For example, a high evaluation value is set for image content expressing any of emotions of delight, anger, sorrow, and pleasure.

Furthermore, an object captured as a tracking target is set as a high evaluation value as material content for the user of the object.

Furthermore, in the case of an image of a sudden event, an event that is not present in daily life, and the like, a high evaluation value is set as the material content useful on the story configuration.

An image having a positive element or an image having a negative element is a material content useful in the construction of a story as positive content or negative content, and thus has a high evaluation value.

The information of the viewing history of the user, whether the user likes and has viewed the viewing history many times or does not reproduce the viewing history at all represents the importance, the favorite, and the like for the individual user, so that the evaluation value according to the viewing history can be set.

The evaluation unit 15 sets the relevance evaluation value and the individual evaluation value as described above, for example, for each material content associated with the user for every user who is a customer.

These settings can be made by comprehensively reflecting the determination result of the scene content by the image analysis, the image quality, the user information, and the like.

Such evaluation values are provided to the story generation unit 16.

The story generation unit 16 performs processing of generating personal impressed content for a certain user on the basis of some trigger.

For example, the story generation unit 16 performs a story setting with the customer user himself/herself, his/her family, and the like as a main character, and collects material content that can be used as each scene constituting the story as candidate content. Then, calculation (evaluation function calculation) using the evaluation value is performed for each candidate content, and the material content to be actually used as the impressed content is selected.

Then, editing processing is performed using the selected material content, and for example, an impressed content such as a movie in which the customer user, the family, and the like is the main character is generated.

The impressed content produced in this manner is provided to the user side, and can be viewed by the user through the UI unit 22.

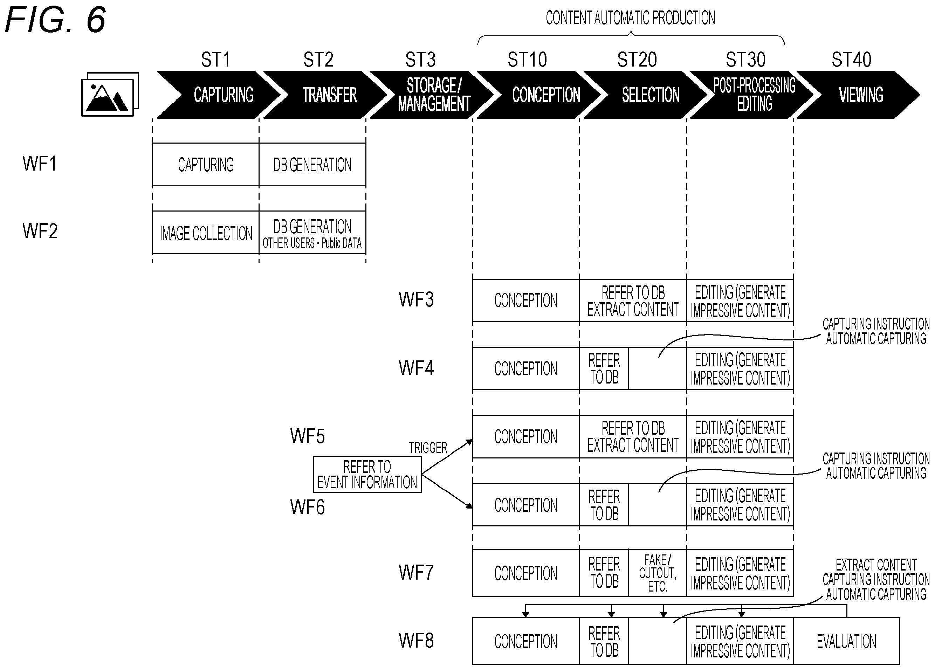

The above is the basic flow of content automatic production, and an example of a timeline of the automatic production is illustrated in Fig. 6.

A time-series procedure is as follows.
· Step ST1: Capturing of a moving image, a still image, and the like as material content
· Step ST2: Transfer of material content from user side to server apparatus 10 (enabling use by server apparatus 10)
· Step ST3: Storage and management of material content on server apparatus 10 side
· Step ST10: Conception of story of impressed content
· Step ST20: Selection of material content according to set story
· Step ST30: Post-processing such as image quality processing and scene clipping on material content, and editing such as joining material content subjected to those processing
· Step ST40: Providing impressed content to user side (viewing on user side)

Here, steps ST10, ST20, and ST30 are content automatic production processing by the story generation unit 16.

Fig. 6 illustrates various workflow examples.

Workflows WF1 and WF2 show up to the collection of material content.

The workflow WF1 is an example in which, for example, moving image capturing and the like using the camera 2 and the like is performed by the user, the moving image data is transferred to the server apparatus 10, and a database (Hereinafter, the database is referred to as "DB".) for the user is generated or recorded in the DB, so that the material content for the user can be used.

The workflow WF2 is an example in which an image of a certain user is collected by a method other than image capturing of the user and managed by a DB for the user in the server apparatus 10, so that the workflow WF2 can be used as material content for the user.

In this case, it is assumed that the images for collection are captured by other users or collected as public data. This is an example of collecting not only material content simply captured by the user, but also material content in a wider range.

Workflows WF3 to WF8 illustrate examples of content automatic production by the story generation unit 16.

The workflow WF3 starts with a request for production of impressed content by the user, a status of predetermined material content, and the like as a trigger.

First, a conception of a story for a certain user is developed, and then a material content is extracted according to a composition of the story with reference to a DB of the user. Then, a material content to be used is selected, and editing processing is performed to generate an impressed content.

As a trigger for automatic production of the impressed content, a production request from the user is assumed. For example, it is a mode in which information indicating what kind of content is desired, such as designation of a theme, a title, specific material content, and the like of the impressed content is presented from the user, and the server apparatus 10 automatically generates the impressed content on the basis of the presentation.

For example, it is also conceivable that the user specifies only a part of the material content that the user wants to use for the impressed content, the server apparatus 10 sets a story accordingly, and selects material content of preceding and subsequent scenes to produce the impressed content.

Furthermore, as a trigger of the automatic production of the impressed content, it is conceivable to start the production in a case where, for example, "Would you like to produce content like ∘ ∘?" is recommended by a message to the user from the server apparatus 10 side and a request is made in response to the recommendation, in addition to the active instruction from the user side as described above.

For example, in a case where material content of an athletic meet of a child of the user is collected from a collection status of the material content, it is conceivable to transmit a message "How about making a movie of the children's athletic meet?".

Furthermore, in a case where there is a certain negative content, in a situation where the positive content corresponding to the certain negative content can be acquired, the story as illustrated in Fig. 4 described above can be configured. Therefore, in such a situation, it is conceivable that content production is recommended to the user, and automatic production is started according to a response of the user.

Furthermore, in a case where there is material content that the user forgets, for example, an image captured on an old date or an image that the user hardly views, it is conceivable to recommend the user to produce content according to the content of the image and to start automatic production according to a response of the user.

Similarly, in a case where there is an image when the user starts a new activity, an image taken at a place where the user has been to for the first time, an image taken at a place where the user has not been to for a long time, and the like, it is conceivable that content production according to the content of the image is recommended to the user, and automatic production is started according to a response of the user.

Note that it is conceivable that transmission of these messages is performed by an electronic mail, an SNS message, and the like to a user registered in a service, display on an application screen of a terminal device (computer device 3, tablet terminal 4, mobile terminal 5, etc.) of a user having an application for service provision installed, push notification, and the like.

Moreover, as a trigger of the automatic production of the impressed content, it is conceivable that, for example, a theme or a title is automatically set from the content of the material content and the production of the impressed content is automatically started without waiting for the request of the user.

The workflow WF4 is an example of a case where the conception of the story for a certain user is similarly developed in response to a trigger such as a request from the user, and then the material content is extracted according to the composition of the story with reference to the DB of the user, but the material content is insufficient.

In such a case, an image of an insufficient scene is collected by executing a capturing instruction to the user, some automatic capturing, and the like as the material content complement processing. Thereafter, when necessary material content is prepared, editing processing is performed to generate impressed content. As the capturing instruction to the user, for example, it is conceivable to give a notification such as "Please capture a scene like o o " by a message to the user. Furthermore, the automatic capturing instruction may be an instruction to capture a predetermined scene to a robot, a home appliance, and the like owned by the user, or an instruction to a device of a capturing company.

The workflow WF5 is an example of automatic production of impressed content on the basis of the event information. The attribute information, schedule data, SNS information, and the like of the user are checked, and it is detected that there is a specific event, and the conception of the story is developed. Then, the material content is extracted according to the composition of the story with reference to the DB of the user, the material content to be used is selected, and the editing processing is performed to generate the impressed content.

The determination of the start of the automatic production based on the event information can be made by detecting an assumed event, for example, a birthday party, a mother's day, a date on which an event of interest is held, and the like from, for example, a birthday, a gender, a preference, and the like as the attribute information of the user.

Furthermore, occurrence of a specific event, for example, an event such as homecoming, travel, or date can be detected on the basis of the schedule data of the user.

Furthermore, it is possible to determine the occurrence of an event on the basis of the behavior of the user from the SNS information regarding the user.

Moreover, event determination such as an athletic meet can be performed by image analysis of an image provided as material content.

The workflow WF6 is an example of automatically producing the impressed content on the basis of the event information, but illustrates a case where the material content is insufficient. The user's schedule data, SNS information, and the like are checked, and it is detected that there is a specific event, and the conception of the story is developed. Next, the material content is extracted according to the composition of the story with reference to the DB of the user, and in a case where the material content is insufficient, an image capturing instruction to the user or some automatic capturing is executed as the material content complementing processing, so that an image of an insufficient scene is collected. Thereafter, when necessary material content is prepared, editing processing is performed to generate impressed content.

The workflow WF7 illustrates another example of the material content complement processing in a case where the material content is insufficient similarly to the workflow WF4 (or WF6) .

In this example, in a case where the material content corresponding to the set story is insufficient, the material content is collected from another DB and the like or a necessary image is produced instead of instructing new capturing. For example, a material content is searched with reference to a DB of a family of the target user, a DB of a friend, a public DB, and the like, or an image of a scene necessary as an image synthesis/fake image and the like is generated.

The workflow WF8 is an example in which a process of feeding back the evaluation of the user at the time of viewing is added to the workflow WF3, for example.

As the viewing of the impressed content, in a case where the content is actually delivered as a work or in a case where the user is allowed to perform trial viewing before the final delivery, the user can perform some sort of evaluation operation. The feedback information according to the operation is reflected in content automatic production processing such as story conception, selection of material content, and editing (scene order, etc.).

Fig. 5 illustrates that the learning unit 17 performs learning on the feedback information dFB and reflects the learning result in the processing of the story generation unit 16.

This may be reflected in the work of correcting the impressed content this time, or the preference of the user may be learned and reflected in the subsequent production of the impressed content. That is, this is an example in which the story conception, the material content selection, and the editing method are specialized for the user by using the feedback from the user.

Each of the above workflows is merely an example, and various other examples are assumed. Of course, it is also conceivable that the workflow is selectively used depending on the situation or the user.

By the way, as the workflow WF8, it has been described that the user evaluation in a case where the impressed content is viewed is fed back, but it is also conceivable to feed back the evaluation and the relationship of the material contents.

As described above, the relevance evaluation value and the individual evaluation value are set for each material content in the processing of the evaluation unit 15, but it is conceivable that the evaluation unit 15 further sets relevance presentation information for presenting the relevance of the individual material content with another material content and the evaluation values to the user.

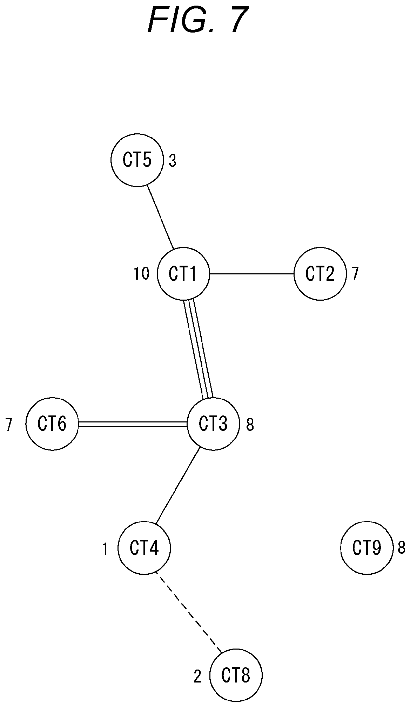

Figs. 7, 8, 9, and 10 illustrate examples of display contents based on the relevance presentation information.

These are one display modes in a case where, in a case where material content (CT1, CT2 ···) is present as material content registered in the DB for a certain user, relevance and the evaluation values of the material content are indicated to the user.

In Fig. 7, first, the material contents CT1, CT2, ··· are displayed. In the drawing, each material content is represented by "CT1" and "CT2" in a circle, but actually, it is conceivable to arrange thumbnail images indicating image contents of each material content. Furthermore, for example, a moving image may be reproduced in response to mouse over or click. In any case, it is desirable to display the image contents of each material content so that the user can easily recognize the image contents.

Each material content is displayed so that the individual evaluation value can be recognized, for example, with a numerical value of 10 levels. For example, in the example of Fig. 7, a numerical value such as "10" is assigned to the material content CT1 and "7" to the material content CT2, so that the individual evaluation value set for each material content can be recognized.

Of course, it is not limited to numerical values, and the individual evaluation value of each material content may be recognized by a difference in size, form, color, brightness, arrangement position, and the like of an image representing the material content.

Furthermore, between the material contents, the relevance evaluation value is indicated by a difference in display mode such as the number of lines, the color of the lines, the thickness of the lines, and the type of the lines. It is conceivable that material contents having higher relevance are expressed so as to be more strongly connected.

In the example of Fig. 7, the material contents CT1 and CT2 have high relevance, the material contents CT4 and CT8 have relatively low relevance, and the material content CT9 has no relevance to other material contents. Such relevance is expressed by the number and type of lines, the presence or absence of lines, and the like indicating connection.

Of course, the relevance evaluation value may be expressed by adding a numerical value to a line indicating perspective, a direction, or a connection of the arrangement positions of the respective material contents.

For example, the evaluation unit 15 generates the relevance presentation information for displaying such an image and provides the relevance presentation information to the story generation unit 16.

The story generation unit 16 can provide such relevance presentation information to the user side and present it to the user by the UI unit 22.

The user can check the display contents as illustrated in Fig. 7 by the UI unit 22 and can also correct the evaluation by operation.

For example, it is possible to perform operations such as correcting an individual evaluation value of material content that is an image of an important scene or a favorite image of the user himself/herself to a high value, performing an operation to obtain a higher relevance evaluation value for material content that has relevance but is evaluated to be less relevant, or cutting a line that has no relevance but is evaluated to be relevant.

Such operation information is fed back to the server apparatus 10 side as feedback information dFB illustrated in Fig. 5 so that the evaluation information by the evaluation unit 15 can be corrected. Furthermore, such feedback information dFB is also input to and learned by the learning unit 17, and is reflected in, for example, a function for selecting material content by the story generation unit 16.

In the example of Fig. 7, the individual evaluation value and the relevance evaluation value are expressed for each material content, but only the relevance based on the relevance evaluation values may be expressed, or each individual evaluation value may be presented.

That is, the relevance presentation information may be any information as long as it can present some information such as evaluation and relevance regarding the material content to the user. Furthermore, it is desirable to form a user interface that allows the user to perform an operation for providing the feedback information dFB for all or a part of the presentation contents.

Although Fig. 7 described above is an example illustrating the relevance between the material contents, various display modes of the relevance can be considered.

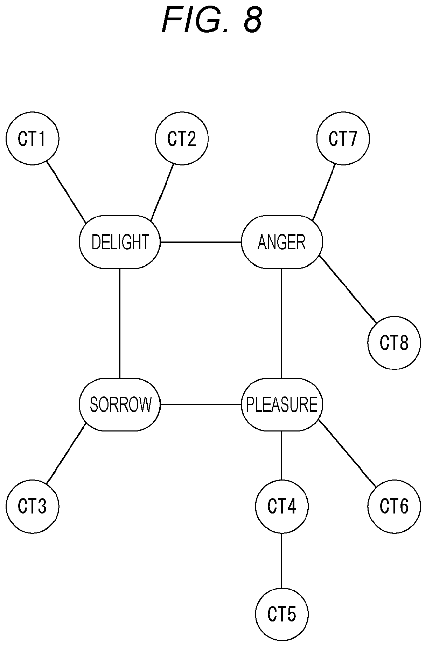

Fig. 8 is an example of presenting key elements and illustrating material content associated therewith.

In the case of Fig. 8, the material contents CT1 and CT2 corresponding to "pleasant", the material contents CT7 and CT8 corresponding to "angry", the material contents CT3 corresponding to "sad", and the material contents CT4, CT5, and CT6 corresponding to "comfortable" are presented with "pleasant", "angry", "sad", and "happy" as key elements, respectively.

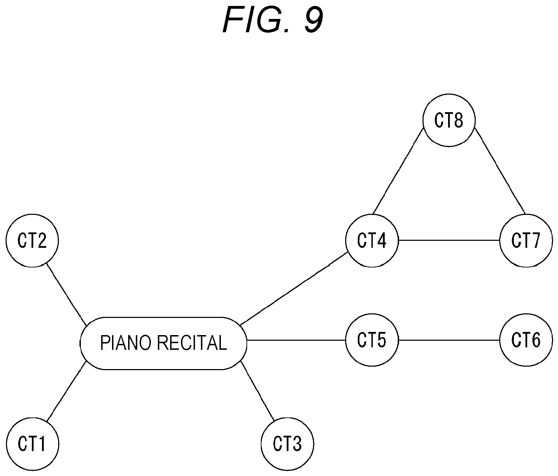

Fig. 9 is also an example of presenting key elements. In this case, a certain event (for example, a piano recital) is used as a key element, and related material contents CT1, CT2, CT3, CT4, and CT5 are presented for the event. In this example, material contents CT6, CT7, and CT8 related to the material contents CT4 and CT5 related to the event are also presented although not directly corresponding to the event.

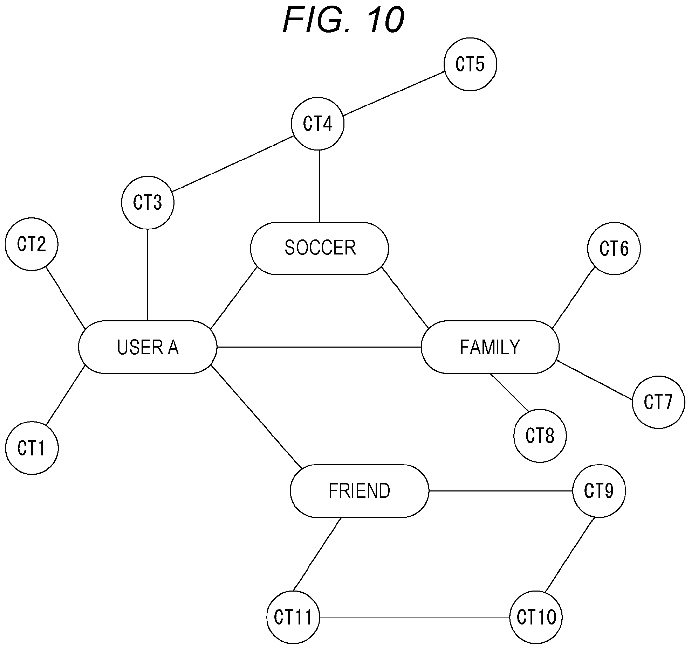

Fig. 10 illustrates an example of using a composite key element. In this example, "family", "friend", and the like in a personal relationship with the user A are presented as the key elements, and "soccer" as a hobby of the user A is also presented, and material content related to the personal relationship and the key elements and relevance between the material contents are presented.

As described above, various presentation examples based on the relevance presentation information can be considered, but it is desirable that the user can easily recognize the relevance of each material content. Of course, also in the examples as illustrated in Figs. 8, 9, and 10, the individual evaluation value may be displayed as described in Fig. 7, and the relevance may be expressed in different modes.

### <4. Automatic production processing including content complement>

A specific example of content automatic production processing performed particularly by the function of the story generation unit 16 in the server apparatus 10 will be described.

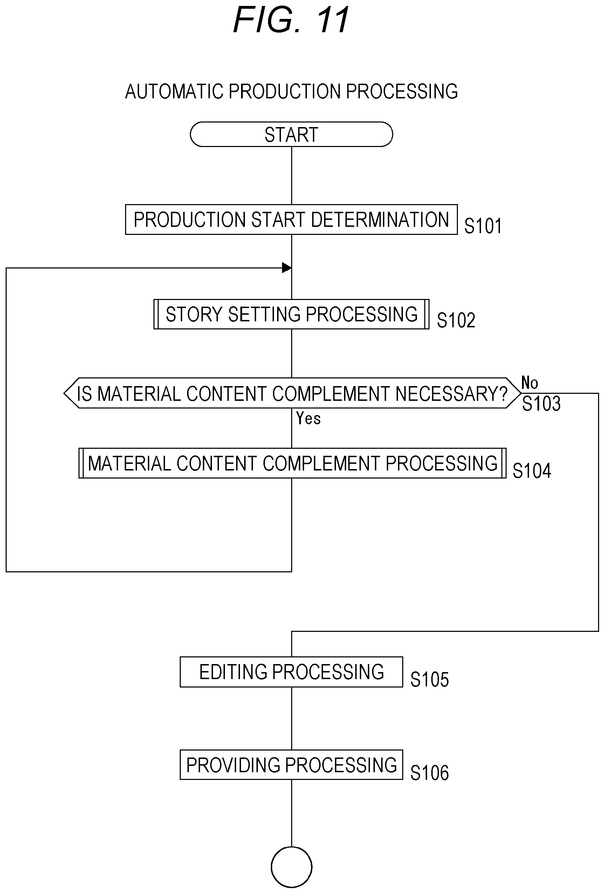

Fig. 11 illustrates automatic production processing of impressed content by the information processing apparatus as the server apparatus 10.

In step S101, the server apparatus 10 performs production start determination according to a trigger. This trigger is start determination processing in response to the request reception from the user described in the workflow WF3 of Fig. 6 or start determination processing in response to the event and the like described in the workflow WF5.

In step S102, the server apparatus 10 performs the story setting processing of the impressed content produced this time.

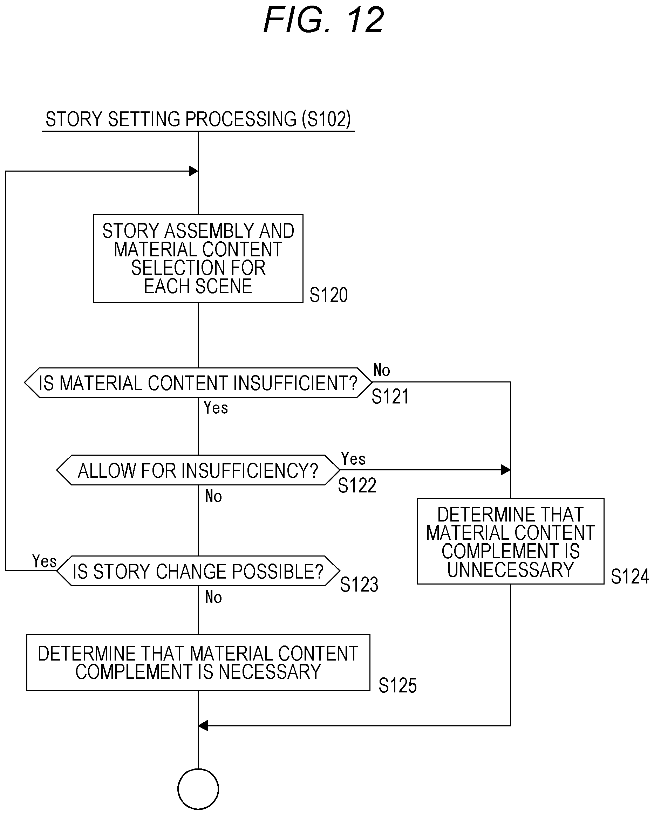

A detailed example of the story setting processing is illustrated in Fig. 12.

In step S120 of Fig. 12, the server apparatus 10 performs, for example, the story assembly processing illustrated in Fig. 4, and performs the material content selection processing to be applied to each scene constituting the story.

The assembling of the story is processing of setting a transition for an event as a certain theme and assembling settings like chapter CH1 to chapter CH5 in Fig. 4.

Furthermore, one or a plurality of material contents to be used for each chapter is selected.

For example, candidate content that can be applied to a scene of each chapter (for example, one chapter includes one or a plurality of scenes) is extracted from material content stored in a DB corresponding to a user who is an impressed content production target. In this case, for example, in a case where the hobby or preference of the user, the family, and the like can be determined from the user information, it is effective to extract the material content as an image matching the hobby of the user and the like.

Then, the material content to be used for each scene is selected from the candidate content. Of course, it is desirable to reflect the preference of the user and the like in this selection.

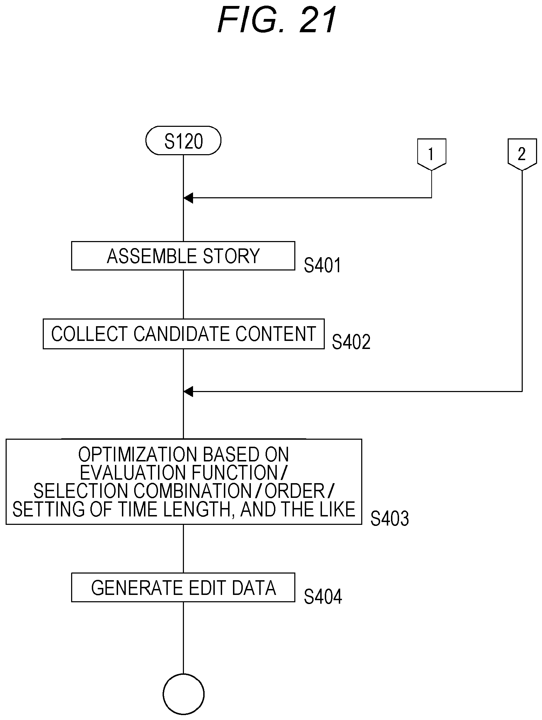

A more specific processing example of such step S120 will be described later with reference to Fig. 21.

After the setting of the story and the selection of the material content corresponding thereto are performed in the processing of step S120, the server apparatus 10 determines whether or not the material content is insufficient in step S121.

In a case where it is determined that the story can be set in the processing of step S120 and all the necessary material content has been prepared, the processing proceeds to step S124, and it is determined that the content complement is unnecessary (for example, the complement flag is turned off), and the processing of Fig. 12 is terminated. That is, the process proceeds from step S102 to step S103 in Fig. 11.

In this case, when the complement flag is off, the server apparatus 10 determines that the material content complement is unnecessary in step S103, proceeds to step S105, and performs the editing processing.

In this editing processing, the server apparatus 10 generates impressed content constituting a series of stories using the chapter configuration set in the story setting processing and the selected material content. For example, a necessary scene is cut out from a moving image as each selected material content, image quality adjustment is performed, an image effect is added, and then the material content is connected according to the progress of the chapter.

When the impressed content is completed by such editing processing, the server apparatus 10 performs processing of providing the impressed content to the user side in step S106.

For example, the user can view the movie by downloading or streaming a movie as impressed content.

The processing procedure in the case illustrated in the workflows WF3 and WF5 of Fig. 6 has been described above.

On the other hand, in step S121 in Fig. 12, it may be determined that the material content is insufficient.

For example, there is no material content to be applied to a certain scene. Alternatively, although there is material content suitable for a certain scene as content, it may be determined that there is no appropriate material content by the evaluation value (individual evaluation value or relevance evaluation value) being low and not suitable for use or the image quality being low.

However, even if a part of the material content is insufficient, for example, even if the scene is deleted, there is no significant change in the story composition or the scene is not a very important scene, the shortage of the material content may be allowed. Furthermore, the user may intentionally input information for determining that the material content of the scene is unnecessary. Even in that case, the shortage is allowed. In other words, in such a case, allowing the shortage, that is, intentionally not including a certain scene is considered to be more in line with the user's intention.

In a case where the server apparatus 10 determines that the shortage of the material content is in the allowable range, the process proceeds from step S122 to step S124, and the process proceeds to step S105 in Fig. 11 in the similar manner as described above.

However, in a case where the important material content is insufficient, or in a case where a logic that does not allow insufficiency of the material content required for the scene configuration is adopted, the server apparatus 10 proceeds to step S123 in Fig. 12, and determines whether or not the story change is possible.

For example, the server apparatus 10 evaluates the importance on the story of the scene in which the material content is insufficient, the possibility of partial change of the story in the chapter, and the like, and determines whether or not the story change is possible. The preference of the user based on learning may be added to the determination element. For example, in the case of the current user, if it is possible to evaluate that such a scene is not important, it is possible to change the story.

When the story can be changed, the processing returns from step S123 to step S120, and the assembly of the story and the selection of the material content are performed again.

When determining that the material content is insufficient, the insufficiency is not allowable in the current story, and the story change is not appropriate, the server apparatus 10 proceeds from step S123 to step S125, determines that the material content complement processing is necessary (for example, sets the complement flag to on), and ends the processing of Fig. 12. That is, step S102 in Fig. 11 ends, and the process proceeds to step S103.

In this case, when the complement flag is on, the server apparatus 10 determines that the material content complement is necessary in step S103, proceeds to step S104, and executes the material content complement processing.

That is, such a case is the situation described in the workflows WF4 and WF6 of Fig. 6.

An example of the material content complement processing performed in step S104 in Fig. 11 will be described.

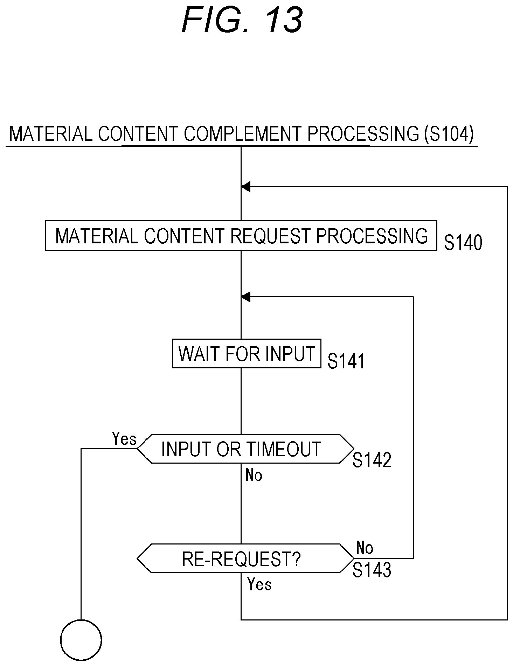

Fig. 13 illustrates an example in which processing of requesting an external device to record material content constituting a story is performed as the material content complement processing.

In step S140, the server apparatus 10 performs processing of requesting the external device to record the material content, that is, to record an image and the like by capturing.

The external device is the various devices illustrated in Fig. 1, and is a device corresponding to the material content providing unit 20 in Fig. 2.

For example, the server apparatus 10 transmits a request content such as "please capture a video of a scene of o o " to the mobile terminal 5 and the like, which is an external device, as a message to the user.

It is also conceivable to transmit a request message of "Please capture a video of the scene of ∘ ∘ of A-san" to the mobile terminal 5 of the family of the user, the mobile terminal 5 of the friend, and the like.

Alternatively, the server apparatus 10 may transmit control information instructing an application of the mobile terminal 5, the agent device 8, the robot, the monitoring camera 9, and the like to capture or provide a target scene.

That is, the material content request processing in step S140 is processing of requesting or instructing some external device to record the material content of the necessary scene and transfer the material content to the server apparatus 10 (to be able to be used as the material content for producing the impressed content).

After performing the request processing in step S140, the server apparatus 10 waits for an input of the material content in step S141.

While waiting for input of the material content, the server apparatus 10 checks timeout or input of the material content in step S142, and waits for the timing of requesting again in step S143.

For example, one week from the request is timed out, and the request is made again at a predetermined timing before the timeout occurs.

In a case where it is the re-request timing before the timeout expires, the server apparatus 10 returns to step S140 and performs the material content request processing again. In this case, the same request process as the previous request process may be performed, or it is conceivable to change the external device of the request destination or change the requested content.

In a case where the material content is input in response to the request for the material content, or in a case where the material content is not input even after the timeout period, the server apparatus 10 ends the material content complementing processing from step S142.

After the material content complement processing as illustrated in Fig. 13 is performed as step S104 in Fig. 11, for example, the processing returns to the story setting processing in step S102.

In this case, the processing described with reference to Fig. 12 is executed again, but in case that necessary material content can be acquired, the server apparatus 10 may perform processing of satisfying the newly acquired material content for the scene in which the material content is insufficient in step S120.

Furthermore, in a case where the material content complement processing has timed out, in a case where the input material content cannot be applied in terms of quality, or in a case where it is determined that the input material content is not appropriate as the scene content, it is conceivable to start over from the assembly of the story.

For example, as a result of performing the processing of step S120 of Fig. 12 through the material content complement processing as illustrated in Fig. 13, in a case where the processing proceeds from step S121 or step S122 to step S124, the processing proceeds to the editing processing of step S105 as the processing of Fig. 11, and the impressed content is generated.

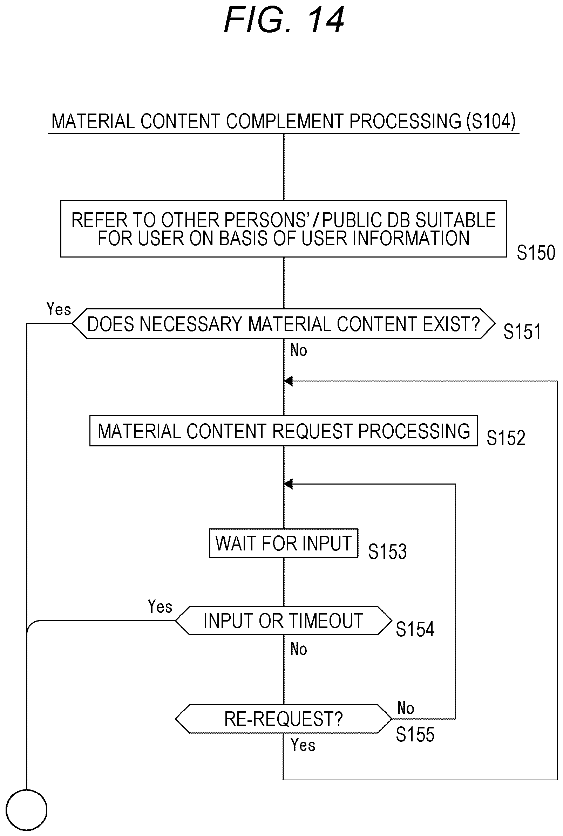

Fig. 14 illustrates another example of the material content complement processing.

This is an example of widening a target for extracting the material content prior to requesting the material content to the external device.

In step S150, the server apparatus 10 performs processing of searching for material content applicable to a scene in which the material content is insufficient with reference to a DB or a public DB associated with another person suitable for the current production target user on the basis of the user information.

For example, it is basically assumed that the material content is extracted from the DB associated with the user to be produced in step S120 of Fig. 12. When the material content is insufficient, a target for searching the material content is expanded to a DB for other persons or a public DB.

The other persons are a family member, a friend, a colleague, and the like of the target user on the basis of the user information. The DB associated with the other persons is a DB that manages images and the like captured by a person corresponding to these "others" in the service.

Furthermore, it is conceivable to search for the material content in consideration of the user's hobby/preference, for example, a viewpoint of what kind of image the user or his/her family likes.

For example, in a case where a hobby or a taste of the user or a family of the user can be determined from the user information, an image matching the hobby of the user or a material content determined or estimated as a scene or image content preferred by the user is searched.

In step S151, the server apparatus 10 determines whether or not the currently necessary material content can be found from the DB associated with another person or the public DB, and in a case where the currently necessary material content can be found, the material content complement processing is ended, and the processing proceeds to step S102 in Fig. 11.

In a case where it is determined in step S151 of Fig. 14 that the necessary material content cannot be found, the server apparatus 10 proceeds to step S152 and performs the material content request processing for the external device.

Then, processing of input standby in step S153, input or timeout of material content in step S154, and re-request standby in step S155 is performed. The processing in steps S152 to S155 is basically similar to the processing in steps S140 to S143 in Fig. 13.

However, also in the material content request processing in step S152, it is conceivable to request the material content in consideration of the user or the family's hobby/preference, for example, what kind of image the user prefers.

For example, in a case where a hobby or a taste of the user or a family of the user can be determined from the user information, capturing of a scene or image contents that are determined or estimated to be preferred by the user or that matches the hobby of the user is requested.

For example, a recommended message such as "please capture a relay" or "I recommend capturing near the goal" is sent to a user who likes jogging and is determined or estimated to like running at an athletic meet of his/her child.

Therefore, it is possible to easily obtain material content having contents preferred by the user.

As described above, by expanding the range of the DB for searching the material content before performing the material content request processing for the external device, it is possible to increase the possibility that the material content can be quickly satisfied.

By using an image and the like captured by other persons, for example, an image having an angle of view that is not intended by the user himself/herself may be inserted into the impressed content, and the width of the content may be expected to be widened.

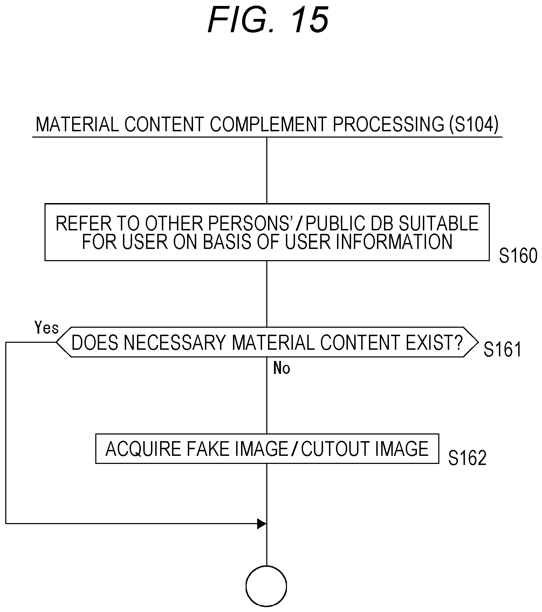

Fig. 15 is another example of the material content complement processing.

In step S160, the server apparatus 10 performs processing of searching for material content applicable to a scene in which the material content is insufficient with reference to a DB or a public DB associated with other persons suitable for the current user to be produced on the basis of the user information. The processing is similar to step S150 in Fig. 14.

In step S161, the server apparatus 10 determines whether or not the currently necessary material content can be found from the DB associated with other persons or the public DB, and in a case where the currently necessary material content can be found, the material content complement processing is ended, and the processing proceeds to step S102 in Fig. 11.

In a case where it is determined that the necessary material content cannot be found, the server apparatus 10 proceeds from step S161 to step S162, and performs acquisition processing of a fake image and a cutout image.

The term "fake image" as used herein means that it is not an image obtained by actually capturing a subject, and refers to a composite image, a CG image, an animation image, and the like.

The server apparatus 10 generates an image necessary for a scene by image synthesis processing, CG processing, and the like. Alternatively, the server apparatus 10 instructs the external device to execute such image generation, and acquires the generated image.

Alternatively, the server apparatus 10 cuts out a part of an image of another material content to obtain the material content adapted to the scene. For example, it is also assumed that a scene in which the corresponding user is captured is cut out from a video of a monitoring camera, a captured image of other persons, and the like.

By performing these processing, the server apparatus 10 generates insufficient material content and uses the material content for the corresponding scene.

The server apparatus 10 ends the material content complement processing through the processing in step S162, and proceeds to step S102 in Fig. 11.

Note that the processing in step S162 in Fig. 15 may be executed when a timeout occurs in a case where the material content request processing for the external device is performed in Fig. 13 or 14, for example.

### <5. Recommend/complement processing before production>

The processing in Figs. 11 to 15 has been described as processing after the production of the impressed content is started. However, it is also possible that the server side takes an opportunity to produce the impressed content and recommends the user to capture an image and the like. A processing example in such a case will be described.

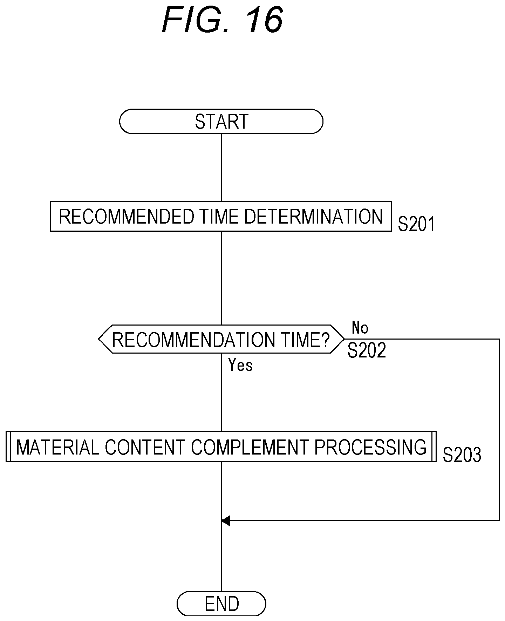

Fig. 16 illustrates an example in which the server apparatus 10 determines the recommendation time for the user on the basis of the user information and performs the material content complement processing.

In step S201, the server apparatus 10 performs recommended time determination of material acquisition for impressed content according to an event that occurs in the future.

For example, similarly to the production trigger described in the workflows WF5 and WF6 of Fig. 6, an event that will be an opportunity to produce impressed content is checked on the basis of event information, schedule information, and the like. Then, it is determined whether or not it has become a recommendation opportunity of capturing of an image and the like used for producing such impressed content.

Furthermore, the recommendation opportunity may be determined according to the life stage of the user even if it is not an event and the like. For example, information such as the progress of age, a change in family structure, or marriage or birth is checked, and a turning point of a life stage and the like is set as an opportunity to produce an impressed content as a memory thereof, and a timing close thereto is determined as a recommendation opportunity.

For example, for a certain target user, the server apparatus 10 determines a time point before an event that can be a material, such as one week before an athletic meet of a child or three days before a wedding of the target user, as the recommendation time.

When it is determined as the recommendation time, the server apparatus 10 proceeds from step S202 to step S203, and performs material content complement processing for future impressed content production.

This material content complement processing is basically processing of requesting the user to "capture such a scene" in an event and the like in which the user participates.

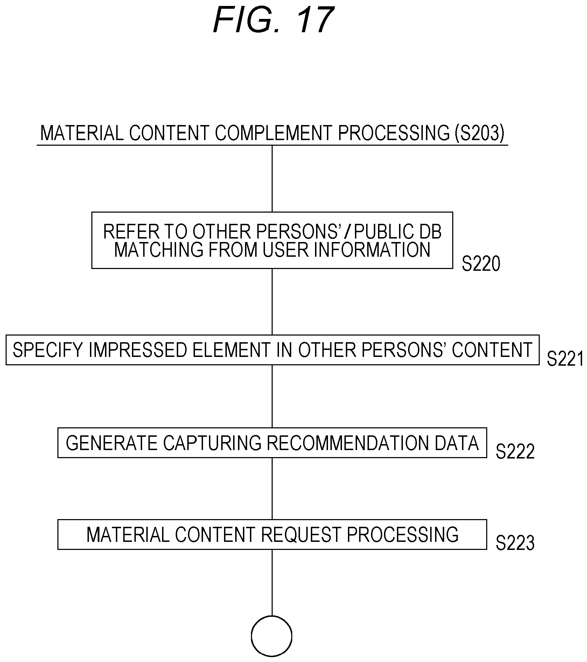

Fig. 17 illustrates an example of the material content complement processing in step S203.

In step S220, the server apparatus 10 refers to the user information to be recommended and searches for suitable content (material content or impressed content) with reference to a DB of other persons or a public.

For example, in a case where next week is an athletic meet of a child for a target user, content of other persons' athletic meet is extracted. The "other persons" in this case does not need to be a related person of the user, and may be a target to widely refer to the DB of completely unrelated persons.

In step S221, the server apparatus 10 analyzes a highly evaluated scene, image contents, and the like in the extracted content of the other persons, and specifies an impressed element. For the evaluation, for example, feedback information dFB for the impressed content, an evaluation value of the material content, and the like can be used, or a scene, an angle of view, and the like often used in a similar event (for example, an athletic meet) may be highly evaluated on a general basis.

For example, for the target user, in a case where next week is an athletic meet of a child, a scene, image content, and the like with high evaluation is specified with reference to content of another person's athletic meet, and the specified scene, image contents, and the like is set as an impressed element.

In step S222, the server apparatus 10 generates the capturing recommendation data on the basis of the analysis in step S221. For example, the capturing recommendation data is generated using text and image data as information including a capturing technique, advice, and the like according to a scene, an angle, and the like with high evaluation.

Then, in step S223, the server apparatus 10 performs material content request processing. In this case, the capturing recommendation data is transmitted to the mobile terminal 5 of the user and the like together with the recommendation contents.

For example, along with a recommendation message, "Next week is your child's athletic meet.

Would you like to produce content?", as a method of capturing at the athletic meet, capturing recommendation data generated with reference to content of others is transmitted.

By performing such recommendation prior to the event, it is expected that the user can easily provide more desirable material content, and the content of the impressed content to be produced thereafter is also highly satisfactory.

In particular, since there is an element that can refer to how other persons image a picture, it is possible to provide useful information even for a user who is not usually accustomed to imaging, and the like.

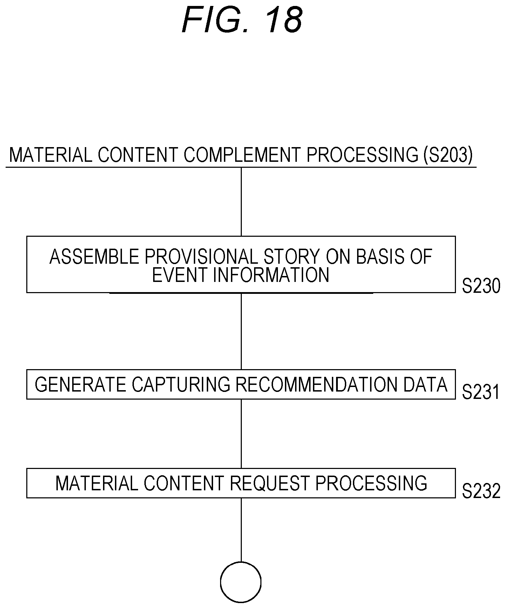

Fig. 18 illustrates an example of processing of step S203 of Fig. 16.

In step S230, the server apparatus 10 performs processing of assembling a provisional story on the basis of the event information for recommendation.

Then, in step S231, the server apparatus 10 sets what kind of material content is required as a scene corresponding to the set provisional story, and generates capturing recommendation data indicating the content of such a scene.

Then, in step S232, the server apparatus 10 performs material content request processing. In this case, the processing is processing of transmitting information for presenting the content of the scene to the mobile terminal 5 and the like of the user as the capturing recommendation data together with the recommendation contents.

For example, along with the recommendation message, "Next week is your live stage. Why don't you create content?", according to the set story, the contents of desirable scenes such as "venue scenery", "stage shot", "backstage scene", and "ending scene" are presented.

By performing such recommendation prior to the event, it becomes easy for the user to provide the material content according to the story, and as a result, it is expected that the content of the impressed content to be produced thereafter also has a high degree of satisfaction.

### <6. Evaluation and feedback of material content>

Next, material content evaluation and feedback processing in the server apparatus 10 will be described.

As described above with reference to Fig. 5, the evaluation unit 15 sets the relevance evaluation value and the individual evaluation value for the material content. Furthermore, response processing, that is, evaluation value update processing is performed according to the feedback information dFB from the user.

One reason for setting and updating the evaluation values in this manner is to enable the server apparatus 10 to be appropriately used for content production when considering saving and management of enormous content (recollection moving images and photographs) as a large number of material contents for a large number of users. For example, since each material content is fragmentary and has no story, there is a high possibility that the material content is buried only by being stored.

Therefore, by converting analysis results of different viewpoints into a mining map by AI processing, it is possible to express, as an evaluation value, a degree of explicitness or a combination of contents with high storylines from the degree of importance or the degree of relevance. Therefore, it is easy to select valuable material content at the time of generating impressed content, and the quality of the automatically produced impressed content is improved.

Furthermore, not only the evaluation value is set, but also the relevance evaluation value and the individual evaluation value are visualized as the relevance presentation information and feedback by the user is enabled, so that correction of the relevance evaluation value and the individual evaluation value, update of the evaluation function for producing the impressed content, and the like are performed so as to be more suitable for the individual user.

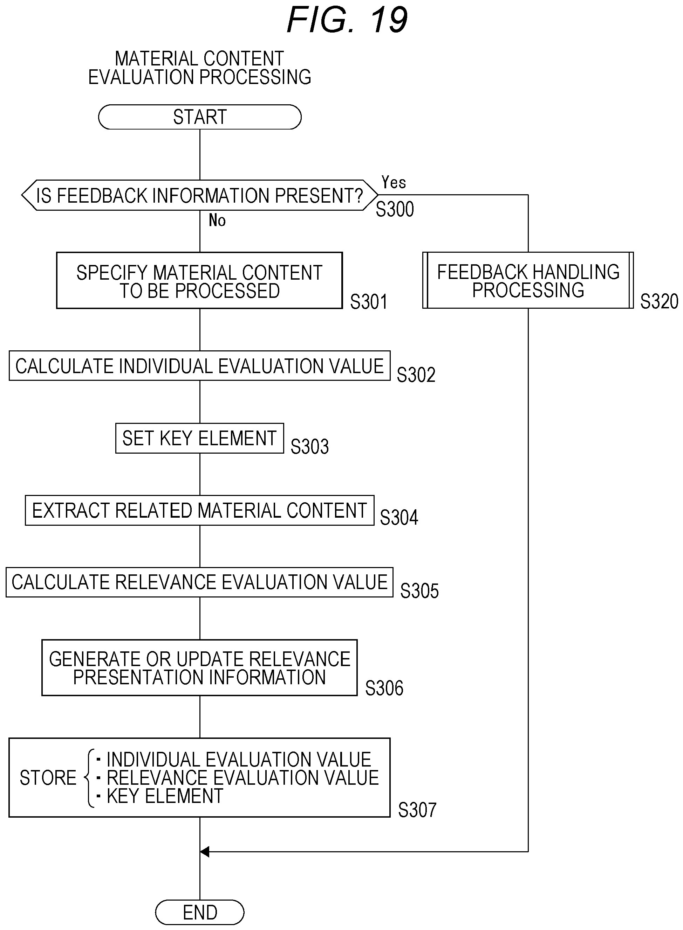

First, Fig. 19 illustrates material content evaluation processing performed by the server apparatus 10 on the basis of the function of the evaluation unit 15.

In step S300, the server apparatus 10 confirms the input of the feedback information dFB related to the material content. When the feedback information dFB is present, feedback handling processing is performed in step S320. This will be described later.

In a case where the feedback information dFB is not input, the server apparatus 10 proceeds to step S301 and specifies the material content to be processed. For example, the material content that is stored but is not subjected to the evaluation processing such as newly uploaded material content is specified as a target of the current evaluation processing. However, the material content for which the evaluation value has already been set may be set as a processing target in order to perform the evaluation processing again according to the lapse of time and the like.

In step S302, the server apparatus 10 calculates an individual evaluation value for the material content targeted for the evaluation processing. As described above, the individual evaluation value is a value for evaluating the value of the image itself or the scene of the material content itself alone, the importance of the contents, and the like. Therefore, the server apparatus 10 performs image analysis, analysis of user information, and the like, and calculates an individual evaluation value by a predetermined calculation using, as an index, relevance to delight, anger, sorrow, pleasure, and the like whether or not an image has been set as a tracking target (focus target) at the time of imaging, whether or not an image content is an unexpected event, whether or not the image has a positive element, whether or not the image has a negative element, the number of times of reproduction as a viewing history of the user, and the like.

Furthermore, in a case where the hobby/preference of the user, the family, and the like can be determined from the user information, it is desirable to reflect the hobby/preference of the user, the family, and the like on the evaluation value. For example, a high individual evaluation value is set to an image that matches a hobby or an image that is determined or estimated as a scene or image contents preferred by the user.

In step S303, the server apparatus 10 sets a key element for the material content. For example, key elements such as a specific emotion, a type of a related person, and an event title are set. These can be set with reference to an analysis result of image contents, user information, metadata added to an image, and the like.

In step S304, the server apparatus 10 extracts the related material content using the key element. For example, another material content captured at the same event as the material content as the evaluation processing target, another material content captured for the same specific person (for example, a child) as the material content as the evaluation processing target, and the like is extracted.

In step S305, the server apparatus 10 calculates a relevance evaluation value for the material content as an evaluation processing target.

For example, a degree of relevance between the key element and the common material content is quantified to calculate the relevance evaluation value.

The degree of relevance can be determined or estimated from image contents such as a causal relationship of an event, a time series relationship, and existence of a person or an article related to the event.

Furthermore, in a case where the hobby/preference of the user, the family, and the like can be determined from the user information, it is desirable to reflect the hobby/preference of the user, the family, and the like on the evaluation value. Also for material contents having a causal relationship, a high relevance evaluation value is set between material contents that are determined or estimated to be images related to a hobby of the user or include a scene or image contents preferred by the user.

In step S306, the server apparatus 10 generates or updates the relevance presentation information. This is, for example, processing of newly generating the relevance presentation information as described with reference to Figs. 7 to 10, processing of incorporating the material content to be evaluated this time into the existing relevance presentation information, and the like are performed.

In step S307, the server apparatus 10 stores the calculated individual evaluation value, relevance evaluation value, and key element for the material content to be processed. Accordingly, the evaluation processing is terminated.

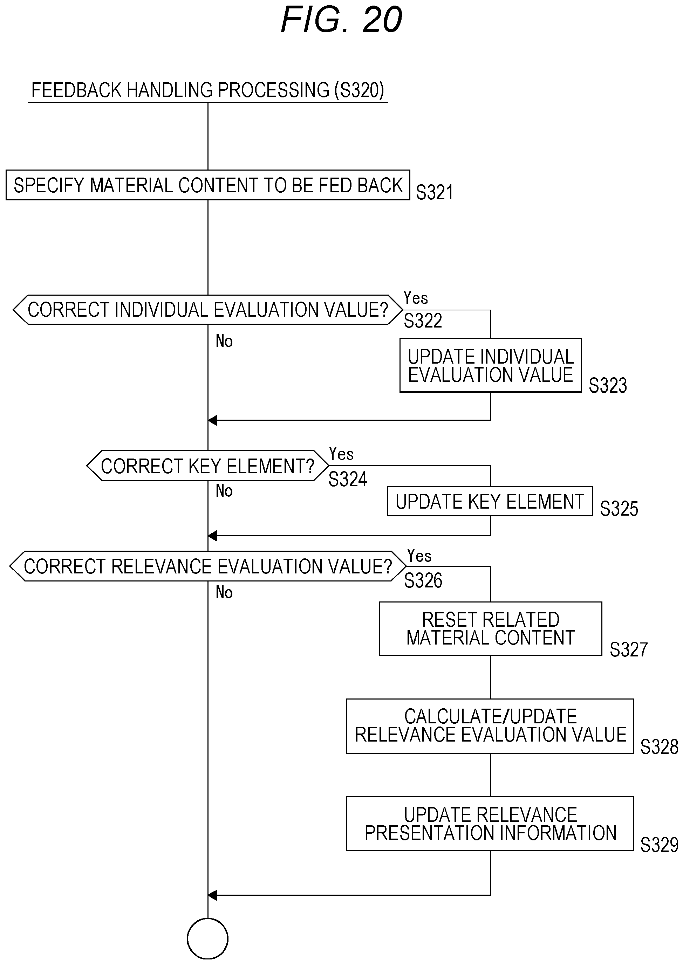

In a case where the feedback information dFB regarding the material content is input, the server apparatus 10 performs, for example, processing of Fig. 20 as the feedback handling processing of step S320.

In step S321, the server apparatus 10 specifies the material content to be fed back.

In step S322, the server apparatus 10 determines whether or not the individual evaluation value needs to be corrected on the basis of the feedback information dFB for the material content specified as a feedback pair.

If necessary, the server apparatus 10 proceeds to step S323 and performs processing of updating the individual evaluation value.

In step S324, the server apparatus 10 determines whether or not it is necessary to correct the individual evaluation value for the material content specified as the feedback target on the basis of the feedback information dFB.

If necessary, the server apparatus 10 proceeds to step S325 and performs processing of updating the key element set for the material content.

In step S326, the server apparatus 10 determines whether or not it is necessary to correct the relevance evaluation value for the material content specified as the feedback target on the basis of the feedback information dFB.

If necessary, the server apparatus 10 proceeds to step S327, and resets related material content for the material content. That is, it is another material content of which relevance is presented by the relevance presentation information.

In step S328, the server apparatus 10 calculates and updates a relevance evaluation value with another newly set related material content.

In step S329, the server apparatus 10 updates the relevance presentation information according to the related other material content and the update of the relevance evaluation value with the other material content.

By performing the processing as illustrated in Fig. 20, the evaluation value set by the evaluation unit 15 of the server apparatus 10 is sequentially updated according to the feedback information dFB from the user.

Meanwhile, as described above, the feedback information dFB from the user is not only reflected in the evaluation value of the material content but also reflected in the production of the impressed content.

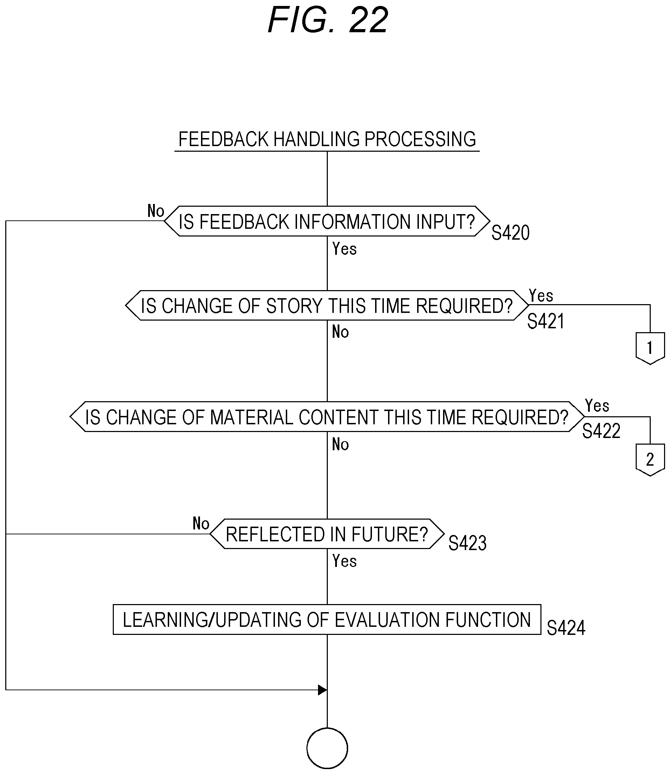

With reference to Figs. 21 and 22, the processing of step S120 in the story setting processing described above with reference to Fig. 12 will be described in detail, and an example in which the feedback information dFB is reflected will be described.

Although it has been described that the assembling of the story and the selection of the material content according to the story are performed in step S120 of Fig. 12, for example, the server apparatus 10 specifically performs processing as illustrated in Fig. 21.

In step S401, the server apparatus 10 assembles a story.

The story is assumed to be assembled as in the example of Fig. 4. For example, the story assembly in which the configuration corresponding to the transition is arranged is performed.

Furthermore, for example, in a case where a provisional story is assembled in step S230 of Fig. 18 for a certain event, the story may be assembled based on the provisional story. In particular, this is because a possibility that material content suitable for the scene of the event is provided from the user is assumed.

In step S402, the server apparatus 10 collects the candidate content. That is, for each chapter constituting a story, one or a plurality of candidate content to be used is collected from a DB and the like of a user who is a production target. At this point of time, a plurality of material contents may be set as the candidate content that is a candidate to be used for one scene. For example, the candidate content is collected on the basis of the scene contents, the user information, the metadata, and the like regardless of the evaluation value.

In step S403, the material content to be used for each scene constituting the story is selected. For example, a method of selecting material content having a high individual evaluation value from among a large number of candidate content may be used for one scene, but it is desirable to reflect the relevance and the like more multidimensionally. For example, in addition to selecting a material content having a high individual evaluation value for each scene, a relevance evaluation value between each selected material content is also reflected to optimize a plurality of material contents as a selection result. Furthermore, a combination, an order, a time length, and the like of material contents are also used as selection elements.

The selection processing of the material content to be used for each scene constituting the story is performed using the evaluation function including elements such as the individual evaluation value, the relevance evaluation value, the time length, and the order.

Note that, basically, it becomes easy to select the material content having a high individual evaluation value or relevance evaluation value. However, since the evaluation value is updated according to the feedback information dFB based on the user operation as described with reference to Figs. 19 and 20, it becomes easy to select the material content suitable for the user's preference.

Furthermore, in the first place, at the time of setting the individual evaluation value and the relevance evaluation value in Fig. 19, by setting the evaluation value reflecting the preference (What kind of image, scene is preferred, and the like) of the user's family and the like that can be determined or estimated from the user information, the preference of the user is easily reflected as the material content to be applied to the scene.

In step S404, the server apparatus 10 generates edit data based on the selection result of the material content in step S403.

The edit data includes information of the selected material content, information of an order of joining the material content, information of processing (image quality adjustment, cutout, effect, and the like) for each material content, and the like. That is, it is design information of impressed content production.

For example, such processing is performed as step S120 in Fig. 12, and then, editing processing based on the editing information is executed in step S105 in Fig. 11.

Here, in a case where the feedback information dFB based on the user operation is input, the processing of Fig. 22 can be performed by the functions of the learning unit 17 and the story generation unit 16.

In a case where the feedback information dFB is input, the server apparatus 10 advances the processing of Fig. 22 from step S420 to step S421.

In a case where the feedback information dFB is to request the change of the story regarding the impressed content currently being produced, the process proceeds from step S421 to step S401 in Fig. 21, and the construction of the story is performed again. For example, it is assumed that some scenes are cut or replaced on the basis of the feedback information dFB.

Note that the feedback information dFB for the impressed content being produced is assumed to be transmitted in response to the user operation, for example, in a case where the server apparatus 10 causes the user to temporarily view the impressed content before the actual delivery of the impressed content.

In a case where the feedback information dFB is the content requiring the change of the material content at this time, the server apparatus 10 proceeds from step S422 in Fig. 22 to step S403 in Fig. 21.

Thus, the material content is selected again in step S403.

The feedback information dFB is not necessarily reflected in the impressed content being produced. For example, there is also a case of the feedback information dFB for presentation by the relevance presentation information. However, since the operation by the user also affects the story composition, it is desirable to cause the user to learn for future story generation. For example, in a case where the content is to be reflected in future content production, the server apparatus 10 proceeds from step S423 to step S424, and performs learning/update processing of the evaluation function.

For example, some coefficients and variable elements of the evaluation function used when the impressed content is produced for the user are updated. Therefore, for example, the directionality of the material content selection in step S403 of Fig. 21 and the element to be emphasized are corrected. That is, the material content selection processing is also adapted according to the user's preference.

Note that, in the above description, an example has been described in which the impressed content to be generated is adapted to the user by performing the generation of the evaluation function and the learning/update processing as the functions of the evaluation unit 15 and the learning unit 17. However, it is also conceivable to adapt the impressed content to be generated to the user by using a learning model learned using machine learning and deep learning instead of the processing as described above.

For example, the story generation unit 16 includes a function to substitute for the evaluation unit 15, and generates impressed content while evaluating, classifying, and extracting the material content.

Specifically, the story generation unit 16 performs deep learning based on various types of information regarding the user and generates a learning model suitable for the user.

Then, the material content is classified and extracted by applying the learning model, and whether or not the material content is material content applicable to the story is determined, and then the impressed content is generated using the material content determined to be related.

In this manner, the learning model generation function and the content generation function using the learning model are provided as the evaluation unit and the story generation unit 16.

Furthermore, as the learning unit 17, relearning is performed on the basis of the feedback information dFB of the user and the learning model is updated, which is suitable for more desirable impressed content generation.

### <7. Management of negative/positive content>

Some material content can be classified as negative content or positive content.

Usually, it is assumed that the negative content is not contents that the user wants to view. However, as described with reference to Fig. 4, considering the construction of a story as personal content and the like, negative content can be material content useful for enhancing the impression at the time of viewing.

On the other hand, for example, considering a form in which the server apparatus 10 functions as a cloud storage and provides a storage area of an individual user in the storage 10a, the user can easily view the negative content as well as other material content, which may be undesirable.

Therefore, in the server apparatus 10, the negative content is stored and managed separately from other material content by the function of the storage management unit 18.

For example, accessibility from the user is not secured, or even from the server apparatus 10, the remote storage 12 having lower accessibility than the storage 10a is prepared, and the negative content is stored therein.

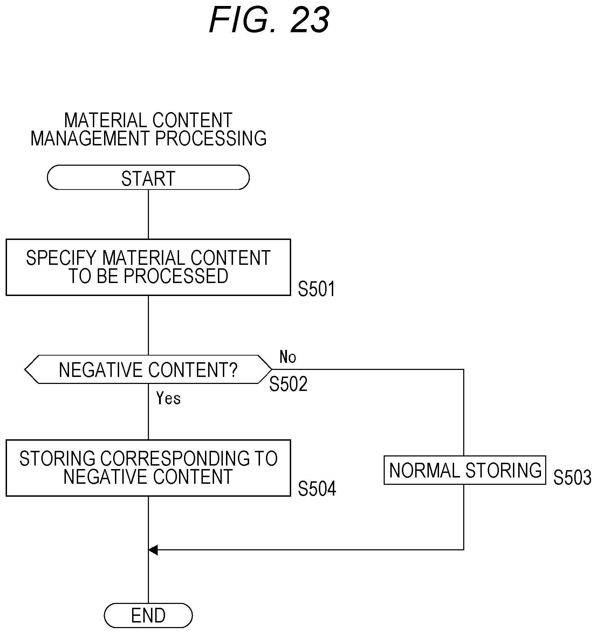

Fig. 23 illustrates material content management processing performed by the server apparatus 10 by the function of the storage management unit 18.

In step S501, the server apparatus 10 specifies the material content to be processed.

In step S502, the server apparatus 10 determines whether or not the material content to be processed is negative content.

Whether or not the content is negative content may be determined by some processing. For example, if there is vital information of the user at the time of imaging as metadata accompanying the image, whether or not a negative emotion occurs may be determined on the basis of the vital information, or estimation can be made from the facial expression, behavior, gesture, and the like of the user by image analysis.

Not being browsed by the user may be regarded as a negative factor and added to the determination factor.

Furthermore, a feature different from other daily images may be regarded as a negative element and added to the determination element.

Furthermore, in a case where there is an interval between the daily image and the daily image, it is also conceivable to estimate that some negative event has occurred, and add the negative element to the estimation element on the assumption that a negative element is likely to exist in the image at such an interval time.

Note that it is also possible to determine the positive content by a method similar to such determination of the negative content.

In a case where it is determined in step S502 that the content is not negative content, the server apparatus 10 proceeds to step S503 and normally stores the material content. For example, the user is stored in the storage 10a so as to be managed by a DB associated with the user.

In a case where it is determined in step S502 that the material content is negative content, the server apparatus 10 proceeds to step S504 and performs storage processing corresponding to the negative content for the material content. For example, the negative content is stored in the remote storage 12 so as to be managed in a DB associated with the user.

In this way, in the case of the negative content, the content is stored separately from other material content.

Note that the storage in the remote storage 12 has been described as an example of the negative content correspondence storage in step S504, but the following storage can be considered as the remote storage 12.
· Storage device disposed at a remote location separately from the storage 10a
· Storage device with lower accessibility from the server apparatus 10 than the storage 10a
· Storage device managed to limit access from a user
· Storage device accessible through communication path with low transfer rate
· Storage device connected to standalone device
· The storage 10a is connected from the server apparatus 10 via a first network, whereas the remote storage 12 is connected from the server apparatus via a second network having a communication speed lower than that of the first network.

Although the above is an example, it is conceivable to assume that access is not normally performed as the remote storage 12.

Furthermore, the process of step S504 is not necessarily limited to recording in the remote storage 12. For example, negative content may be stored in the storage 10a similarly to other material content.
However, the accessibility is distinguished by performing hierarchical management that makes the access difficult, performing encryption, setting of access permission of only a specific authorized person, and the like.

The processing of Fig. 23 described above is an example in which the negative content is stored and managed separately from the other material content, but the negative content, the positive content, and the other material content may be managed separately.

In this case, the accessibility of the negative content is lowered by separating the storage and the like, but the accessibility of the positive content and the accessibility of other material content may be equivalent. For example, the positive content and the other material content are similarly stored in the DB of the corresponding user in the storage 10a, but in the case of the positive content, a flag indicating that the content is the positive content may be set.

Furthermore, all material content may be divided into negative content and positive content. For example, content that does not correspond to negative content may be managed as positive content.

Although the negative content is managed separately as described above, it is desirable to change the management state according to the situation since the negative content is useful in a case where it is desired to use the negative content as a material for producing impressed content.

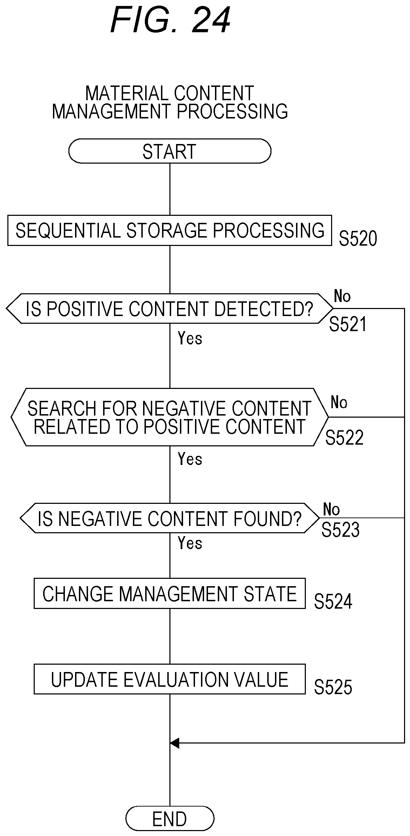

Therefore, it is conceivable to perform processing as illustrated in Fig. 24.

Sequential storage processing in step S520 indicates, for example, processing in which the server apparatus 10 sequentially stores the material content by, for example, the processing in Fig. 23 in response to the material content being uploaded.

Here, in step S521, the server apparatus 10 confirms whether or not the material content stored this time is positive content.

In a case where the content is not positive content, that is, in a case where the content is negative content or material content which is neither negative content nor positive content, the processing of Fig. 24 ends.

In a case where the content is positive content, the server apparatus 10 advances the processing to step S522, and searches for negative content related to the current positive content.

For example, in a case where the positive content of this time has contents in which the user has played an active role in a baseball game, processing of searching for negative content of a scene in which the user has been injured during practice in the past is performed.

When the corresponding negative content cannot be found, the processing ends from step S523, but when the corresponding negative content is found, the server apparatus 10 performs processing of changing the management state of the negative content in step S524. For example, processing of improving the accessibility for the server apparatus 10, such as moving the storage device from the remote storage 12 to the storage 10a, is performed.

Note that the server apparatus 10 may determine that the negative content managed as the negative content correspondence storage in step S504 of Fig. 23 is not entered as the candidate content by the process of the story generation unit 16.

That is, it is assumed that the negative content is not unconditionally used for producing impressed content. However, as the processing of step S524, in a case where corresponding positive content exists, it is conceivable to change the management state of the negative content so that the negative content is qualified to be candidate content. That is, since the importance has occurred in the story of enhancing the positive content, it is possible to use for the production of the impressed content for the first time.

In step S525, the server apparatus 10 updates the evaluation value of the negative content in response to the relevance of the negative content with the positive content stored this time. That is, the relevance evaluation value and the individual evaluation value are recalculated and updated.

By the above processing, the possibility that the negative content corresponding to the positive content is applied to a certain scene in the production of the impressed content can be generated or increased. Therefore, it can be expected that the story of the impressed content automatically produced using the appropriate negative content is enhanced.

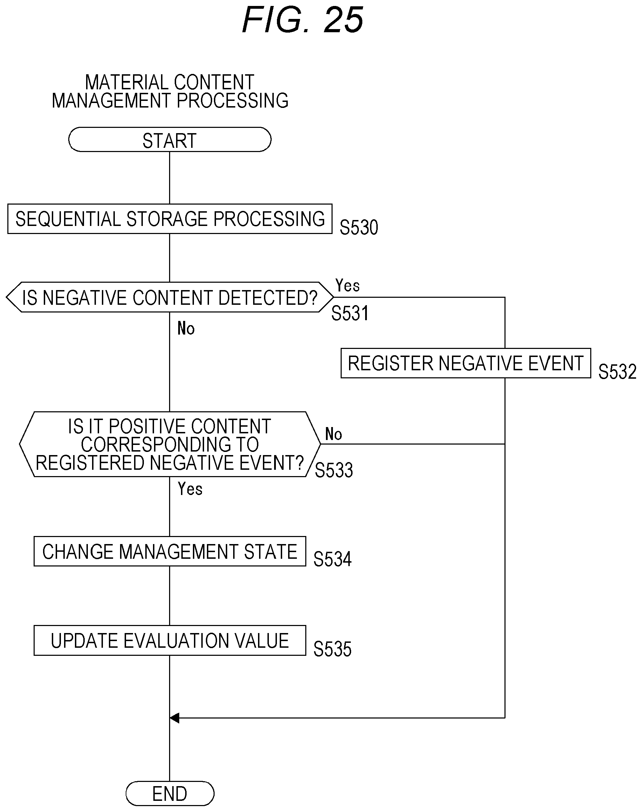

Fig. 25 is a processing example having a similar purpose.

The sequential storage processing in step S530 indicates, for example, processing in which the server apparatus 10 sequentially stores the material content by, for example, the processing in Fig. 23 in response to the material content being uploaded.

Here, in step S531, the server apparatus 10 confirms whether or not the material content stored this time is negative content.

In a case where the content is negative content, processing of registering a negative event is performed in step S532. For example, information indicating when and what kind of negative event has occurred for a certain user is registered as one piece of user information.

In a case where it is determined in step S531 that the content is not negative content, the server apparatus 10 determines in step S533 whether or not the material content stored this time is positive content corresponding to a negative event registered in the past.

In a case where the material content stored this time is positive content related to the negative event registered in the processing of step S532 in the past, the server apparatus 10 proceeds to step S534 and performs processing of changing the management state of the negative content related to the registered negative event.

For example, processing of improving the accessibility for the server apparatus 10, such as moving the storage device from the remote storage 12 to the storage 10a, is performed.

Also in this case, it is conceivable that the server apparatus 10 changes the management state so that the negative content can be qualified as candidate content.

In step S535, the server apparatus 10 updates the evaluation value of the negative content according to the relevance of the negative content with the positive content stored this time. That is, the relevance evaluation value and the individual evaluation value are recalculated and updated.

Also by the above processing, the possibility that the negative content corresponding to the positive content is applied to a certain scene in the production of the impressed content can be generated or increased.

### <8. Conclusion and modification examples>

According to the above embodiment, the following effects can be obtained.

The server apparatus 10 as the information processing apparatus according to the embodiment includes a story generation unit 16 that performs processing of requesting an external device to record material content constituting a story for impressed content automatically produced (see Figs. 11 to 18).

This processing is processing useful for gathering materials of impressed content in which personal behavior, experience, and the like of the user of the customer are featured on the story. In particular, by making a specific request such as what scene is desired to be captured, it is suitable for the collection of the material content.

In the embodiment, an example has been described in which the story generation unit 16 performs the story setting of the impressed content, selects the material content to be used, performs the story setting processing of determining the shortage of the material content, and performs the processing of requesting the external device to record the material content in response to the determination of the shortage of the material content (See Figs. 11, 12, 13, and 14).

By collecting the material content according to the story and requesting the external device to record the material content when the material content is insufficient, the material content complement processing can be efficiently executed in the production of the automatically produced content.

In the embodiment, an example has been described in which the story generation unit 16 performs the recommended time determination processing related to the user who is the customer, and requests the external device to record the material content according to the recommended time determination processing (see Fig. 16).

That is, an opportunity of content automatic production related to a user who is a customer of the content automatic production service is determined by an event schedule, a life stage, and the like of the user. Then, the processing of requesting recording of the material content is performed according to the determined period.

By recommending an image recording and the like by capturing the user or requesting recording to various devices according to an event, a change in life, and the like that will occur in the future for the user who is a customer, it is easy to obtain material content in an opportunity to contribute to memories and impressions for the user. By using such material content, it is possible to increase the possibility of providing automatically produced content with high user satisfaction.

Note that the period related to the user as a customer includes not only the user himself/herself but also a period based on various events or life stages related to family and friends.

In the embodiment, an example has been described in which the story generation unit 16 determines the user's preference on the basis of the user information and performs processing of requesting recording of the material content on the basis of the determined preference information. For example, preference determination is performed on the basis of user information regarding the user himself/herself who is a customer, his/her family, and a friend, and the recording request of the material content is performed on the basis of the preference determination (see Fig. 14).

By requesting a record on the basis of user information regarding the user himself/herself, a family member, a relative, a friend, and the like of the user who is a customer, it becomes easy to collect material content matching the preference of the user on the viewer side, and the possibility of realizing automatically produced content matching the preference can be increased.

In the embodiment, an example has been described in which the story generation unit 16 determines the user's preference on the basis of the user information and performs processing of selecting the material content using the determined preference information as a selection element. For example, the preference is determined or estimated on the basis of user information regarding the user himself/herself who is a customer, his/her family, and friends. By setting such an evaluation value reflecting the preference, processing of selecting the material content using the preference information as a selection element is performed (See step S403 in Figs. 19 and 21).

Based on the user information regarding the user himself/herself, a family, a relative, a friend, and the like of the user who is a customer, it is possible to select material content matching the preference of the user on the viewer side according to the story. Therefore, it is possible to increase the possibility that the automatically produced content matching the user's preference can be realized.

In the embodiment, an example has been described in which the story generation unit 16 performs the processing of requesting the recording of the material content on the basis of the event information regarding the user (See Figs. 16 and 18). For example, an appropriate scene and the like according to the type of the event information of the user who is the customer is determined, and the recording request of the appropriate material content is performed.

There are various types of events such as sports games, presentations, weddings, children's athletic meets, and stages of performances and plays. Desirable scenes and the like are conceivable in accordance with the events. By requesting the capturing of such a scene, the possibility of realizing the automatically produced content with higher perfection can be increased.

In the embodiment, the story generation unit 16 may perform processing of selecting material content on the basis of event information regarding the user.

In a case where the story corresponding to the event is temporarily assembled in step S230 of Fig. 18 and the story is assembled based on the assembled story in step S201 of Fig. 21, the material content selected in step S403 is selected on the basis of the event information. That is, the material content suitable for an appropriate scene and the like according to the type of the event information of the user who is the customer is selected.

Therefore, it is possible to increase the possibility of realizing the automatically produced content with high perfection according to the event.

In the embodiment, an example has been described in which the time determination based on the life stage of the user is performed as the recommended time determination processing (See Fig. 16). For example, as a life stage of the user, time determination such as birth, enrollment, graduation, employment, marriage, child birth, child growth, and retirement is performed, and selection and recording request of material content suitable for the time is performed according to the time determination.

The progress or change of the life stage of the user has a story, and is suitable as an opportunity to produce an automatically produced content. Therefore, by performing the period determination according to the life stage, capturing and the like can be requested at a timing suitable for collecting the material content suitable for the automatically produced content. Therefore, this makes it easy to collect material content desirable for automatic production.

In the embodiment, an example has been described in which the story generation unit 16 generates recommendation data indicating the content of the material content requested to be recorded on the basis of the event of the factor determined to be the time requested to be recorded in the period determination processing and the content of another user for the same event (see Fig. 17).

For example, the event that is the cause of the determination as the time for requesting recording in the time determination processing is, for example, an event on the life stage of the user (enrollment, graduation, jobs, marriage, and the like), various events, and the like. In a case where it is determined that it is time to request recording due to such an event, data for recommending the contents of a scene to be captured and the like is generated on the basis of content in a case where another person has the same event.

In an event, a life stage, and the like of the user, the server apparatus 10 generates capturing recommendation data indicating recommended contents with reference to content (material content or automatically produced content) of another person in the same event or life stage. Then, the information is transmitted to the terminal device of the user and presented to the user. Therefore, the user can know what kind of capturing should be performed in this event, and as a result, it becomes easy to obtain material content suitable for the automatically produced content, and it is easy to realize the automatically produced content with high user satisfaction.

In the embodiment, the story generation unit 16 performs the story setting of the content to be automatically produced for the user who is the customer, selects the material content to be used from the DB corresponding to the user, and performs the story setting processing of determining the shortage of the material content. Then, in a case where it is determined that the material content is insufficient, the material content is searched from another DB (for example, a DB corresponding to another user, a public DB, and the like), and in a case where it is determined that the material content is insufficient, processing of requesting the external device to record the material content is performed (see Fig. 14).

Therefore, it is possible to widely search for material content such as an image captured by a close person such as another person, for example, a friend or a family, an image captured by a completely different person, or a public image, in addition to a still image or a moving image simply uploaded by the customer user. Therefore, content can be automatically produced using more various image stocks. Furthermore, by making the recording request as little as possible, it is possible to increase the possibility that content can be quickly produced without taking time and effort for the user. That is, the efficiency of the material content complement processing can be improved.

The server apparatus 10 as the information processing apparatus according to the embodiment includes the evaluation unit 15 that performs a process of setting an evaluation value for material content recorded in an accessible state, and the story generation unit 16 that selects material content constituting a story set in the story setting process with reference to the evaluation value and performs automatic content production by an editing process using the selected material content (See Figs. 19 to 22).

When the material content is selected with reference to the evaluation value (the individual evaluation value or the relevance evaluation value) in the production processing of the automatically produced content, the possibility of using the material content more desirable for the user can be increased, and the automatically produced content with high user satisfaction can be provided.

In the embodiment, an example has been described in which the story generation unit 16 performs the collection processing of the material content to be the use candidate according to the set story, and performs the processing of selecting the material content to be used for the automatic content production using the evaluation value among the material content collected as the candidate (See Fig. 21).

With the evaluation value given to each material content, it is possible to easily and appropriately select the material content suitable for the current automatic production among the candidate content.

For example, the candidate content corresponding to the set scene can be collected on the basis of the scene content, but it is difficult to select the material content optimal for the current automatically produced content or the material content that impresses the current user only with the image content. Therefore, selection is made in consideration of an evaluation value reflecting the relationship of the material content, the importance of the material content itself, and the like. Therefore, this is considered to enable more desirable content production.

In the embodiment, an example has been described in which the evaluation unit 15 sets the relevance evaluation value indicating the relevance of the material content with another material content (See Fig. 19).

For example, in a case where the material content has relevance such as a causal relationship with other material content, an evaluation value indicating relevance with other material content is set.

It is considered that, by evaluating the relevance with other content without evaluating each material content alone, it is possible to optimize matching as content to be used in one piece of automatically produced content and to automatically produce content that gives more impression.

In the embodiment, an example has been described in which the evaluation unit 15 sets an individual evaluation value for a single material content (See Fig. 19) .

Even if there is a huge amount of content as each material content, the importance is different. The importance as the general scene quality and the importance depending on the scene in which the user's emotion appears are different. Then, determining such importance from each candidate content at the time of automatic production has a large processing load. Therefore, an evaluation value of the content itself is set in advance, and the content can be selected using the evaluation value. Therefore, it is considered that the selection of the material content to be used in the automatically produced content can be easily and appropriately made, and the content automatic production that gives more impression can be performed.

In the embodiment, an example has been described in which the evaluation unit 15 sets the relevance presentation information for presenting the relevance of the material content with another material content (See Figs. 19 and 7 to 10).

For example, as illustrated in Figs. 7 to 10, by generating the relevance presentation information indicating the relevance of each material content, the existence of the material content and the relevance can be presented to the user. The user can easily recognize the type, insufficiency, and the like of the material content.

In the embodiment, an example has been described in which the relevance presentation information and the relevance evaluation value are updated in accordance with a user operation (See Fig. 20).

For example, by presenting the relevance presentation information in the form illustrated in Figs. 7 to 10, the user can confirm appropriateness/inappropriateness of the relevance between the material contents. Then, it is possible to perform an operation such as lowering the relevance between the material contents that are actually less relevant, and it is possible to correct the information of the relevance by performing update processing according to the feedback information dFB. Therefore, the relevance evaluation value and the relevance presentation information can be converged to appropriate values more suitable for the user.

Note that the individual evaluation value is also updated in accordance with the feedback information dFB to converge to a state reflecting the user's hobby and preference.

The relevance presentation information according to the embodiment indicates relevance between material contents by directly associating one material content with another material content.

For example, relevance between pieces of content is presented on a user interface by an image connecting pieces of material content (See Figs. 7 to 10). Therefore, the user can easily confirm the appropriateness/inappropriateness of the relevance between the material contents.

In the embodiment, an example has been described in which the relevance presentation information indicates the relevance of the material content in a form in which the material content is combined with the key element (See Figs. 8 and 9). For example, words or events indicating emotions are used as key elements, and relevance of content is presented on the user interface in a form such as material content corresponding to a certain emotion or material content related to a certain event.

As illustrated in Fig. 8, the user can easily confirm the relevance of the material content according to his/her emotions, the events, and the like, and the appropriateness/inappropriateness of the material content by indicating the relationship of the material content using emotions of delight, anger, sorrow, and pleasure as key elements, or providing an image indicating the relationship of the material content using a certain event as key elements as illustrated in Fig. 9.

In addition, various key elements such as a life stage, a specific keyword, a behavior type, a period, a season, a place, and a user's age can be considered.

In the embodiment, an example has been described in which the relevance presentation information indicates the relevance of the material content in a form in which the material content is combined with the user's personal relationship (See Fig. 10).

For example, as illustrated in Fig. 10, material content related to a family, material content related to a friend, and the like are presented to the user A. Therefore, the user can easily confirm the relevance of the material content according to his/her personal relationship and the appropriateness/inappropriateness thereof.

In addition, various factors such as a parent, a child, a member of a certain circle, a classmate, a person in a workplace, a hobby friend, and a neighbor are conceivable as the human relationship element presenting the related material content from the viewpoint of the user A.

The server apparatus 10 according to the embodiment includes the learning unit 17 that inputs a user operation for the relevance presentation information and performs learning processing.

The learning unit 17 performs learning processing in order to reflect the feedback information dFB from the user for the relevance presentation information in the story setting. Therefore, a story setting reflecting the intention of the user, the importance and relevance of the material content, and the like can be made in the future, or the story of the automatically produced content currently being produced can be corrected.

In the embodiment, an example in which the learning content by the learning unit 17 is reflected in the story correction has been described.

In a case where the process proceeds from step S421 of Fig. 22 to step S401 of Fig. 21, the story correction of the automatically produced content currently being produced is performed according to the learning result. Therefore, the possibility that content suitable for the user can be produced can be increased.

In the embodiment, an example has been described in which the learning content by the learning unit 17 is reflected in the selection of the material content.

In a case where the process proceeds from step S422 of Fig. 22 to step S403 of Fig. 21, the material content to be adopted is re-selected according to the story of the impressed content currently being produced based on the learning result. Therefore, it is possible to increase the possibility that the user can produce automatically produced content using more suitable material content.

In the embodiment, an example has been described in which the learning content by the learning unit 17 is reflected in future content automatic production.

For example, in steps S324 and S329 of Fig. 20, it is indicated that the individual evaluation value and the relevance evaluation value are updated. Furthermore, in step S424 of Fig. 22, it is indicated that the evaluation function is updated such that the learning content is reflected in future automatic production. As a result, learning contents are reflected in future content automatic production. It is possible to develop an automatic production system for impressed content so that the user can produce more desirable automatically produced content.

The server apparatus 10 as the information processing apparatus according to the embodiment includes the storage management unit 18 that stores negative content determined as negative scene contents among material content constituting a story of content to be automatically produced in a state of being distinguishable from other material content (See Figs. 23 to 25).

In the production processing of the impressed content, the material content is selected according to the set scene, but it is considered that the more impressed content can be generated by appropriately selecting the negative content and arranging the negative content on the story configuration. Since the negative content is stored and managed separately from other material content, the negative content can be easily and appropriately selected at the time of producing such automatically produced content.

Note that, in the embodiment, the example in which the negative content and the positive content are distinguished and managed has been described. However, the negative content may be determined, and the negative content and the other material content may be divided and managed.

In the embodiment, an example has been described in which the storage management unit 18 performs a process of distinctively storing negative content and positive content determined as positive scene content for the material content (See Figs. 23 to 25).

In the scene set in the production processing of the impressed content, it is desirable that the positive content and the negative content are appropriately selected. Since the negative content and the positive content are stored and managed separately, the negative content and the positive content can be easily and appropriately selected at the time of producing such automatically produced content.

In the embodiment, an example has been described in which the storage management unit 18 stores the material content determined to be the negative content in the remote storage 12 (second storage device) different from the storage 10a (first storage device) that stores and manages the material content other than the negative content.

By storing the negative content and the other (positive content) in another storage device, it is possible to appropriately distinguish the negative content and make it difficult for the user and the like to normally show the negative content.

For example, it is assumed that the material content managed by the cloud server can be simply viewed as a moving image, a still image, and the like stored by the user in addition to being used for the automatically produced content, but it is also assumed that the user usually does not want to look back on the negative content so much, and in some cases, wants to forget the negative content. Furthermore, there is also a case where the image is an image of the user captured by a person other than the user (robot and the like) who browses the image. In such a case, there is a possibility that the user does not want to be seen by himself/herself or another person. Therefore, storage in a separate storage enables management that is not normally viewed.

In the embodiment, it is assumed that the storage 10a is a storage device managed in a state where user access to the material content is permitted, and the remote storage 12 is a storage device managed in a state where access to the material content is permitted only for a specific administrator.

For example, it is assumed that the storage 10a and the remote storage 12 have different access authorities.

In this way, it is possible to set a state in which the negative content is not normally shown to the user.

In the embodiment, an example has been described in which the remote storage 12 is a storage device in which the access speed from the storage management unit 18 is slower than that of the storage 10a.

For example, it is assumed that the storage 10a and the remote storage 12 have different access speeds due to a difference between the inside and outside of the network, a communication method, and the like. In this way, it is possible to make it difficult for a general user to see negative content.

In order to slow down the communication speed, for example, in a case where the storage 10a is a storage device in the apparatus of the server apparatus 10, a storage device connected to a LAN, a storage device connected to a network that is usually used, and the like, the remote storage 12 is assumed to be a storage device connected to a network that performs communication at a low transfer rate, a storage device disposed outside the earth such as a desert area other than an urban area or the moon surface, a storage device connected to a standalone computer, and the like. In any case, a storage device that is inconvenient for normal viewing can be assumed.

In the embodiment, an example is assumed in which the storage management unit 18 can access the storage 10a via the first network, and the storage management unit 18 can access the remote storage 12 via the second network.

The network differentiation can make the accessibility to negative content different from other material content.

In the embodiment, an example has been described in which the storage management unit 18 stores the material content determined to be the negative content and the material content other than the negative content in the storage device in different hierarchical management states.

For example, a storage device of a server that manages the material content is used to manage the negative content and the material content other than the negative content in folders in different hierarchies. Alternatively, in a case where different storages are used, the hierarchical management states are made different.

The hierarchical management can also lower the accessibility to the negative content than the other (positive content).

In the embodiment, an example has been described in which the storage management unit 18 performs a process of facilitating access by the storage management unit 18 in response to a determination that negative content is related to positive content (See Figs. 24 and 25).

For example, the negative content is normally stored and managed in a state in which the accessibility is lowered, but is managed in a state in which the accessibility is improved in response to confirming the presence of the related positive content.

It is assumed that the negative content in which the related positive content exists is likely to be selected as one of the scenes constituting the impressed content, and it is assumed that the access to the server apparatus 10 is facilitated and the negative content is easily provided as the candidate content when the automatically produced content is produced. Therefore, it is possible to make the negative content, which is usually managed in a state of being difficult to view, easy to use in the impressed content.

In the embodiment, it has been described that the storage management unit 18 sets the negative content as the material content that can be set as the candidate content for use in the content automatic production process in response to the determination that the negative content is related to the positive content.

That is, normally, the negative content is not a use candidate in the automatically produced content, but the negative content can be made a candidate content in response to confirming the presence of the related positive content. Therefore, it is possible to prevent negative content from being unnecessarily used for impressed content.

Furthermore, by allowing the content to be used for content automatic production for the first time only with the presence of positive content corresponding to negative content, the content is used not only as a simple negative scene but also as content for a story leading to a subsequent positive event. Therefore, negative content can be effectively used.

In the embodiment, an example has been mainly described in which an impressed content such as a movie is automatically produced using material content as a moving image. However, it is of course assumed that still image data, audio data, text data, and the like are used as material content, or these data are used in combination. As an example of the automatically produced content, a personal movie of the customer user has been described as "impressed content ". However, the content is not necessarily limited to such personal impressed content, and content of various contents such as content regarding a group or an organization, and content such as a material video and an academic video can be widely considered as the" automatically produced content " in the present disclosure.

The program of the embodiment is a program for causing a CPU, a DSP, or a device including the CPU and the DSP to execute the processing described in the embodiment.

A program according to the embodiment is a program for causing an information processing apparatus to execute a process of requesting an external device to record material content constituting a story for content to be automatically produced.

Furthermore, the program according to the embodiment is a program that causes an information processing apparatus to execute processing of setting an evaluation value for material content recorded in an accessible state, and story generation processing of selecting material content constituting a story set in the story setting processing with reference to the evaluation value and performing automatic content production by editing processing using the selected material content.

Furthermore, the program of the embodiment is a program that causes an information processing apparatus to execute a storage management process of storing negative content determined to be a negative scene content among material content constituting a story of content to be automatically produced in a state of being distinguishable from other material content.

With such a program, the server apparatus 10 described above can be realized in a computer device or other equipment capable of executing information processing.

A program for realizing such a server apparatus 10 can be recorded in advance in an HDD as a recording medium built in a device such as a computer device, a ROM in a microcomputer having a CPU, and the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program can be installed from a removable recording medium to a personal computer and the like, or can be downloaded from a download site via a network such as a local area network (LAN) or the Internet.

Furthermore, such a program is suitable for a wide range of provision of the server apparatus 10 according to the embodiment. For example, by downloading the program to a portable terminal device such as a smartphone or a tablet, a mobile phone, a personal computer, a game device, a video device, a personal digital assistant (PDA), and the like, the smartphone and the like can be caused to function as the server apparatus 10 of the present disclosure.

Note that the effects described in the present specification are merely examples and are not limited, and other effects may be provided.

Note that the present technology can also adopt the following configurations.
(1) An information processing apparatus
   including a storage management unit that stores negative content determined as negative scene contents among material content constituting a story of content to be automatically produced in a state of being distinguishable from other material content.
(2) The information processing apparatus according to (1) described above, in which
   the storage management unit performs processing of storing the material content by distinguishing between the negative content and positive content determined as positive scene contents.
(3) The information processing apparatus according to (1) or (2) described above, in which
   the storage management unit stores the material content determined as the negative content in a second storage device different from a first storage device that stores and manages the material content other than the negative content.
(4) The information processing apparatus according to (3) described above, in which
   the first storage device includes a storage device managed in a state where user access to material content is permitted, and
   the second storage device includes a storage device managed in a state where access to material content is permitted only for a specific administrator.
(5) The information processing apparatus according to (3) or (4) described above, in which
   the second storage device includes a storage device in which an access speed from the storage management unit is slower than that of the first storage device.
(6) The information processing apparatus according to any one of (3) to (5) described above, in which
   the first storage device can be accessed by the storage management unit via a first network, and the second storage device can be accessed by the storage management unit via a second network.
(7) The information processing apparatus according to any one of (1) to (6) described above, in which
   the storage management unit causes the material content determined as the negative content and the material content other than the negative content to be stored in a storage device in different hierarchical management states.
(8) The information processing apparatus according to any one of (1) to (7) described above, in which
   the storage management unit performs processing of facilitating access by the storage management unit in response to determination that the negative content is related to positive content determined as positive scene contents.
(9) The information processing apparatus according to any one of (1) to (8) described above, in which
   the storage management unit sets the negative content as material content that can be used as candidate content for content automatic production processing in response to determination that the negative content is related to positive content determined as positive scene contents.
(10) An information processing method including storage management processing of storing negative content determined as negative scene contents among material content constituting a story of content to be automatically produced in a state of being distinguishable from other material content,
   in which an information processing apparatus executes the storage management processing.
(11) A program causing an information processing apparatus to execute
   storage management processing of storing negative content determined as negative scene contents among material content constituting a story of content to be automatically produced in a state of being distinguishable from other material content.

### REFERENCE SIGNS LIST

- 2: Camera
- 3: Computer device
- 4: Tablet terminal
- 5: Mobile terminal
- 6: Camera-equipped flying object
- 7: Camera-equipped vehicle
- 8: Agent device
- 9: Monitoring camera
- 10: Server apparatus
- 10a: Storage
- 11: Network
- 12: Remote storage
- 15: Evaluation unit
- 16: Story generation unit
- 17: Learning unit
- 18: Storage management unit
- 20: Material content providing unit
- 21: User information providing unit
- 22: UI unit

## Claims

1. An information processing apparatus comprising a storage management unit that stores negative content determined as negative scene contents among material content constituting a story of content to be automatically produced in a state of being distinguishable from other material content.

2. The information processing apparatus according to claim 1, wherein
the storage management unit performs processing of storing the material content by distinguishing between the negative content and positive content determined as positive scene contents.

3. The information processing apparatus according to claim 1, wherein
the storage management unit stores the material content determined as the negative content in a second storage device different from a first storage device that stores and manages the material content other than the negative content.

4. The information processing apparatus according to claim 3, wherein
the first storage device includes a storage device managed in a state where user access to material content is permitted, and
the second storage device includes a storage device managed in a state where access to material content is permitted only for a specific administrator.

5. The information processing apparatus according to claim 3, wherein
the second storage device includes a storage device in which an access speed from the storage management unit is slower than that of the first storage device.

6. The information processing apparatus according to claim 3, wherein
the first storage device can be accessed by the storage management unit via a first network, and the second storage device can be accessed by the storage management unit via a second network.

7. The information processing apparatus according to claim 1, wherein
the storage management unit causes the material content determined as the negative content and the material content other than the negative content to be stored in a storage device in different hierarchical management states.

8. The information processing apparatus according to claim 1, wherein
the storage management unit performs processing of facilitating access by the storage management unit in response to determination that the negative content is related to positive content determined as positive scene contents.

9. The information processing apparatus according to claim 1, wherein
the storage management unit sets the negative content as material content that can be used as candidate content for content automatic production processing in response to determination that the negative content is related to positive content determined as positive scene contents.

10. An information processing method comprising storage management processing of storing negative content determined as negative scene contents among material content constituting a story of content to be automatically produced in a state of being distinguishable from other material content,
wherein an information processing apparatus executes the storage management processing.

11. A program causing an information processing apparatus to execute
storage management processing of storing negative content determined as negative scene contents among material content constituting a story of content to be automatically produced in a state of being distinguishable from other material content.
